# EUROPÄISCHE PATENTSCHRIFT

(11) **EP 3 783 335 B1**
(45) Veröffentlichungstag und Bekanntmachung des Hinweises auf die Patenterteilung: **15.02.2023**
(21) Anmeldenummer: 20190553.6
(22) Anmeldetag: 11.08.2020
(51) Int. Cl.: G01N 15/02, G01N 1/38, G01N 15/00

(54) **NASSDISPERGIERVORRICHTUNG**
WET DISPERSING DEVICE
DISPOSITIF DE DISPERSION HUMIDE

(30) Priorität: 23.08.2019 DE 102019122725
(43) Veröffentlichungstag der Anmeldung: 24.02.2021
(73) Patentinhaber: Fritsch GmbH, 55743 Idar-Oberstein (DE)
(72) Erfinder: BENES, Leos, 55758 Oberreidenbach (DE); DINGES, Juri, 55743 Idar-Oberstein (DE); HUWER, Egbert, 55758 Oberreidenbach (DE)
(74) Vertreter: Blumbach · Zinngrebe Patentanwälte PartG mbB

(56) Entgegenhaltungen:
- EP-B1- 0 207 176
- WO-A1-2015/176698
- DE-A1-102014 001 759
- JP-A- 2002 116 134
- US-A1- 2003 064 924
- Sympatec Gmbh: "Ultra flexible wet dispersion for disperse systems in open or closed loops", , 2 January 2019 (2019-01-02), XP055949115, Retrieved from the Internet: URL:https://www.sympatec.com/en/particle-m easurement/dispersing-units/lixell/ [retrieved on 2022-08-04]

## Beschreibung

Die Erfindung betrifft eine Nassdispergiervorrichtung für einen Dispersionskreislauf, insbesondere für Laserpartikelgrößenmessgeräte. Die Nassdispergiervorrichtung kann zwischen einer Kreislaufstellung, in welcher die Dispersion in den Dispersionskreislauf gepumpt wird, und durch den Dispersionskreislauf zirkuliert, und einer Ablauf- und Spülstellung, in welcher die Dispersion zum Leeren des Dispersionskreislaufs und der Nassdispergiervorrichtung in einen Ablauf gepumpt wird und der Dispersionskreislauf gespült werden kann, hin und her schalten.

### Hintergrund der Erfindung

Ein Partikelgrößenmessgerät, welches auf dem Prinzip der Lichtbeugung arbeitet, verwendet ein Lichtstrahlenbündel, zumeist von einem Laser geliefert, welches die zu untersuchende Probe durchstrahlt. Strahlabwärts der Probe wird die durch Streuung an dem Partikelensemble erzeugte Winkel-Intensitätsverteilung mit einem Detektorsystem aufgenommen. Anhand des so erzeugten Streu-/Beugungsmuster kann die Partikelgrößenverteilung der Partikel in der Probe bestimmt werden. Mathematisch kann die Partikelgrößenverteilung mit der Mie-Theorie beschrieben werden. Die Mie-Theorie behandelt sowohl Streuung unter Vorwärts- als auch unter Rückwärtswinkeln. Ein wichtiger Teil der Mie-Theorie beschreibt die sogenannte Fraunhoferbeugung, welche die Lichtbeugung unter Vorwärtswinkeln betrifft. Grundsätzlich gilt, je kleiner die Partikel sind, desto größer sind die Streuwinkel und umgekehrt. Je nach Aufbau können Partikelgrößen bis zu 1000 µm oder sogar noch größer gemessen werden.

Bekannte Partikelgrößenmessgeräte umfassen eine Lichtquelle, typischerweise einen Laser und eine sogenannte Strahlverarbeitungseinheit, welche den dünnen parallelen Laserstrahl zu einem Parallelstrahl mit größerem Durchmesser aufweitet. Bei frühen Partikelgrößenmessgeräten wurde die zu untersuchende Probe in einer Messzelle in diesem aufgeweiteten Parallelstrahl untersucht und das von den Teilchen erzeugte Beugungsspektrum mit einer Fourier-Linse, welche strahlabwärts der Probe angeordnet ist, auf einen Detektor fokussiert. Diese Technik wird gemäß ISO 13320-1:1999(E) als "konventionelle Technik" bezeichnet. In der EP 0 207 176 B1 derselben Anmelderin ist ein Partikelgrößenmessgerät beschrieben, welches die optischen Verhältnisse gegenüber der konventionellen Technik umkehrt. Dieser Aufbau wird gemäß ISO 13320-1:1999(E) als "Reverse Fourier Set-Up" (Inverse Fourier-Optik) bezeichnet. Bei der inversen Fourier-Optik befindet sich die Fourier-Linse strahlaufwärts der Messzelle, so dass die Probe im konvergenten Lichtstrahlenbündel beleuchtet wird.

Die Messzelle besitzt typischerweise ein Eintrittsfenster durch welches das Lichtstrahlenbündel in die Messzelle eintritt und ein Austrittsfenster, durch welches das gestreute Licht wieder austritt, um von dem Detektorsystem nachgewiesen zu werden. Die Proben liegen typischerweise als Dispersion vor, wobei je nach Messzelle und Dispersionskreislauf, entweder trocken- oder nassdispergierte Proben untersucht werden können.

Für viele Proben bietet die Nass-Dispergierung eine gute Form des Dispergierens. Dazu wird das Probenmaterial in einen geschlossenen Flüssigkeitskreislauf oder genauer Dispersionskreislauf, in welchem sich die Messzelle befindet, gegeben und fortlaufend durch den Dispersionskreislauf zirkuliert. Hierzu weisen Laserpartikelgrößenmessgeräte ggf. eine Aufnahme für eine Nass-Messzelle auf und die Nassdispergiervorrichtung wird als Modul an das Laserpartikelgrößenmessgerät angedockt und an einen Dispersionseinlass und einen Dispersionsauslass an die Messzelle angeschlossen, wobei die Messzelle in dem Partikelgrößenmessgerät im Durchfluss betrieben wird.

Nach jeder Messung werden die Nassdispergiervorrichtung und der Dispersionskreislauf mit der Messzelle und ggf. mit weiteren Bauelementen in dem Dispersionskreislauf gereinigt, d.h. entleert und mit frischer partikelfreier Flüssigkeit gespült. Anschließend kann eine neue Probe in Form einer neuen Dispersion eingefüllt werden. Zum Entleeren und Spülen wird also der Kreislauf unterbrochen und die Dispersion ausgeleitet und ggf. Spülflüssigkeit zum Spülen eingeleitet bzw. durch den unterbrochenen Dispersionskreislauf durchgespült und unmittelbar wieder ausgeleitet.

Typische Nassdispergiervorrichtungen besitzen hierzu Ventile in Teilen des Systems, in welchen sich die Dispersion befindet. Es werden z.B. mehrere 3/2-Wege-Ventile, ein 4/2-Wege-Ventil oder ein 3/2-Wege-Schlauchklemmventil verwendet. Bei diesen herkömmlichen Lösungen ist in Bereichen, in denen sich Dispersion befindet, zumindest eine bewegliche Dichtung oder ein geklemmter Schlauch oder Ähnliches beteiligt.

Z.B. dreht sich bei einem 4/2-Wege-Ventil, durch welches die Dispersion fließt, eine gebohrte Stahlkugel in einer Teflon^{®}packung. Ein 4/2-Wege-Ventil hat sich zwar dahingehend bewährt, dass eine totraumfreie Messung und Spülung ermöglicht wird, allerdings können beim Verstellen des mit der Dispersion gefüllten Ventils die dispergierten Partikel, je nach Material und Partikelgröße, Riefen in der Teflon^{®}packung erzeugen. Dies kann unter Umständen die Dichtigkeit bzw. die Lebensdauer des Systems beeinträchtigen.

Bei einem Schlauchklemmventil werden permanent Partikel in den Schlauch gedrückt, was zur Undichtigkeit des Schlauches führen kann. Bei längerer Nichtbenutzung kann der zusammengedrückte Teil des Schlauches auch zusammenkleben. Außerdem kann der Schlauch im Bereich der Klemmung zum verfrühten Altern neigen bzw. brüchig und undicht werden.

Es kann ferner erwünscht sein, dass der Benutzer oder Kunde einfachen Zugriff auf manche Bauteile der Nassdispergiervorrichtung hat. Ferner kann es erwünscht sein, dass der Benutzer eine Ultraschallbox zur Unterstützung des Dispergierens nachrüsten kann. Hierzu muss das Schlauchsystem ggf. umgesteckt werden, um die Ultraschallbox in den Dispersionskreislauf einzubinden. Oder es ist wünschenswert, bestimmte Bauteile der Nassdispergiervorrichtung zu prüfen und/oder zu warten. Dies kann bei manchen Nassdispergiermodulen jedoch umständlich und arbeitsaufwändig sein.

Weiter können manche Proben, je nach Dispersionsmedium, disperser Phase und weiteren Betriebsparametern dazu neigen, dass Partikel der dispersen Phase in unerwünschter Weise agglomerieren.

Auch können Proben dazu neigen, dass die disperse Phase in unerwünschter Weise aufflockt, was insbesondere bei puderartigen Partikeln vorkommen kann. Derart aufgeflocktes Puder kann dann oben auf der Dispersion aufschwimmen, was zumindest zu einem nur noch unzureichenden Dispergieren führen kann. Um dem entgegen zu wirken, werden der Dispersion manchmal Tenside zugegeben. Die Dosierung von Tensiden bleibt häufig dem Zufall oder der Erfahrung des Benutzers überlassen, was ggf. nicht hinreichend mit überprüfbaren Standards in Einklang steht. Ggf. verhält sich die Gesamtheit der Partikel in der dispersen Phase auch nicht immer und überall gleich. Eine genaue Untersuchung dieser unerwünschten Prozesse steht teilweise noch aus.

Daher haben sich die bisherigen Lösungen zwar grundsätzlich mehr oder weniger bewährt, sind aber unter Umständen verschleißanfällig und wartungsaufwändig bzw. bezüglich der genannten Aspekte weiter verbesserungsfähig.

Aus der JP2002-116134A ist ein Messgerät für Feinstaub bekannt, wobei der Feinstaub in einer Flüssigkeit dispergiert wird, um mittels Diffraktions-/Streuungsmessung die Partikelgrößenverteilung zu berechnen.

Aus der WO 2015/176698A1 ist ein Verfahren der Partikel Tracking Analyse mithilfe von Streulicht (PTA) von Partikeln in der Größenordnung von Nanometern einer Suspension in einer Zellwandung bekannt, wobei gleichzeitig das Zetapotential der Probe, deren Leitfähigkeit und deren pH-Wert messtechnisch erfasst werden.

Aus der DE 10 2014 001 759 A1 ist eine Vorrichtung zur schnellen Analyse der Ladungscharakteristik und der Größenverteilung von Partikeln bekannt, die eine Mess-Sonde für die Partikelgröße, die Viskosität, pH-Wert-Messsonde, einen Temperatur-Sensor und eine Leitung für die Zugabe von Reagenzien ausfweist.

### Allgemeine Beschreibung der Erfindung

Es ist daher eine Aufgabe der Erfindung, eine Nassdispergiervorrichtung bereit zu stellen, welche dem Benutzer Mittel an die Hand gibt, um mögliche Partikel-Agglomeration und/oder das Aufflocken von puderartiger disperser Phase zu untersuchen und ggf. zu vermeiden oder zu vermindern.

Eine weitere Aufgabe der Erfindung ist es, eine Nassdispergiervorrichtung bereit zu stellen, die dem Benutzer Mittel an die Hand gibt, eine kontrollierte Beeinflussung der Gesamtheit der Partikel in der dispersen Phase unter bestimmten Rahmenbedingungen zu ermöglichen.

Eine weitere Aufgabe der Erfindung ist es, eine Nassdispergiervorrichtung bereit zu stellen, die langlebig und wartungsarm ist und insbesondere wenig Verschleiß aufweist.

Ein weiterer Aspekt der Aufgabe ist es, eine Nassdispergiervorrichtung bereit zu stellen, die dem Benutzer eine Möglichkeit einräumt, den jeweiligen Fluss der Dispersion direkt zu sehen und insbesondere den Ablauf- und Spülvorgang optisch überwachen zu können.

Ein spezieller Aspekt der Aufgabe ist es, 4/2-Wege-Ventile bzw. Schlauchklemmen im hydraulischen System zu vermeiden.

Eine weitere Aufgabe der Erfindung ist es, eine Nassdispergiervorrichtung bereit zu stellen, die dem Benutzer die Überprüfung und Wartung von Bauteilen der Nassdispergiervorrichtung sowie die Befüllung und Reinigung erleichtert und insbesondere schnellen und einen einfachen Zugriff auf bestimmte Bauteile der Nassdispergiervorrichtung erlaubt.

Die Aufgabe der Erfindung wird von dem Gegenstand der unabhängigen Ansprüche gelöst. Bevorzugte Ausführungsformen sind Gegenstand der abhängigen Ansprüche.

Gemäß einem Aspekt der Erfindung wird eine Nassdispergiervorrichtung, insbesondere für Laserpartikelgrößenmessgeräte bereitgestellt, welche ein Probenbad für eine Dispersion mit flüssigem Dispersionsmedium aufweist. Das Probenbad weist einen Vorlauf bzw. Vorlaufanschluss zum Einleiten der Dispersion aus dem Probenbad in einen Dispersionskreislauf, insbesondere mit einer Messzelle, z.B. für eine Laserpartikelgrößenuntersuchung mittels Lichtbeugung auf. Über den Vorlauf bzw. Vorlaufanschluss pumpt die Nassdispergiervorrichtung die Dispersion durch den Dispersionskreislauf. Das Probenbad weist ferner einen Rücklauf bzw. Rücklaufanschluss zum Rückführen der Dispersion aus dem Dispersionskreislauf in das Probenbad auf. Demnach bildet das Probenbad einen Teil des Dispersionskreislaufs, jedenfalls in einem Betriebszustand des Dispersionskreislaufs.

Zum Pumpen der Dispersion durch den Dispersionskreislauf ist eine dispersionsfähige Pumpe, z.B. eine Zentrifugalpumpe vorgesehen.

Ferner umfasst das Probenbad einen Ablauf mit einer Ablauföffnung in dem Probenbad zum Ausleiten der Dispersion aus dem Dispersionskreislauf, um den Dispersionskreislauf zu entleeren und/oder mit partikelfreiem Frischmedium zu spülen.

Von dem Rücklauf strömt die Dispersion in ein Rücklaufelement, welches eine Strahlöffnung in dem Probenbad aufweist, durch welche im Betrieb ein Dispersionsstrahl austritt. Die Strahlöffnung bildet demnach eine Austrittsdüse für die Dispersion, durch welche die Dispersion als Strahl (ähnlich einem Wasserstrahl aus einem Gartenschlauch) austritt, so dass der Dispersionsstrahl als Freistrahl ein stückweit durch freien Raum strahlen kann, insoweit die Austrittsdüse nicht in die Dispersion eintaucht, was z.B. zumindest in der Ablauf- und Spülstellung der Fall ist.

Das Rücklaufelement und das Probenbad definieren nun zumindest zwei Stellungen relativ zueinander, nämlich
i) eine Kreislaufstellung, in welcher die Dispersion bei Betrieb der Pumpe in den Dispersionskreislauf gepumpt wird und durch den Dispersionskreislauf und das Probenbads zirkuliert, um an der Dispersion mit der Messzelle im Durchfluss messen zu können, und
ii) eine Ablauf- und Spülstellung, in welcher die Dispersion bei Betrieb der Pumpe aus dem Dispersionskreislauf in den Ablauf gepumpt wird, um den Dispersionskreislauf und das Probenbad von der darin befindlichen Dispersion zu entleeren und ggf. mit Frischmedium, z.B. Frischwasser zu spülen.

Das Rücklaufelement und das Probenbad sind dabei beweglich zueinander angeordnet, insbesondere ist das Rücklaufelement beweglich an dem Probenbad montiert, um durch eine relative Bewegung zwischen dem Rücklaufelement und dem Probenbad zwischen der Kreislaufstellung und der Ablauf- und Spülstellung hin und her zu schalten. Der Dispersionskreislauf, das Probenbad und der Ablauf sowie ggf. ein Frischmediumszulauf bilden dabei ein hydraulisches System mit einem Kreislauf und einem Ablauf aus dem Kreislauf sowie ggf. einem Zulauf in den Kreislauf.

Die Umschaltung zwischen der Kreislaufstellung und der Ablauf- und Spülstellung erfolgt dabei insbesondere durch unterschiedliche Ausrichtung der Strahlöffnung oder Austrittsdüse bzw. des aus der Strahlöffnung oder Austrittsdüse austretenden Dispersionsstrahls innerhalb des Probenbads. Dabei wird der zumindest teilweise als Freistrahl durch die Luft strahlende Dispersionsstrahl unterschiedlich ausgerichtet, so dass durch die unterschiedliche Ausrichtung des Dispersionsstrahls, die Dispersion in unterschiedliche Teile des hydraulischen Systems geleitet wird. In vorteilhafter Weise erfolgt demnach die Umschaltung zwischen der Kreislaufstellung und der Ablauf- und Spülstellung und umgekehrt nicht durch ein geschlossenes Ventil mit dichtenden Bauelementen, sondern mittels unterschiedlicher relativer Ausrichtung zwischen der Strahlöffnung oder Austrittsdüse bzw. dem Dispersionsstrahl und dem Probenbad. Es kann hiermit insbesondere auf eine 4/2-Wege-Ventil und Schlauchklemmungen verzichtet werden.

Dadurch kann in vorteilhafter Weise übermäßiger Verschleiß an von Dispersion durchflossenen Ventilen oder mit Dispersion gefüllten geklemmten Schläuchen vermieden werden. Insbesondere kann der Ablauf, durch welchen zum Entleeren und Spülen zwingend Dispersion fließen muss, permanent und/oder sogar während die Dispersion in dem Dispersionskreislauf zirkuliert, offen sein. Mit anderen Worten befinden sich in dem Ablauf keine dichtenden Bauteile mit aneinander reibenden Dichtflächen zwischen denen Dispersionspartikel sitzen können, wie z.B. Ventile und/oder andere dichtende Bauelemente, wie geklemmte Schläuche. Aufgrund der Umschaltung zwischen der Kreislaufstellung und der Ablauf- und Spülstellung innerhalb des Probenbads mittels einer freien Bewegung zwischen der Austrittsdüse und dem Probenbad brauchen in dem Ablauf und/oder anderen Bereichen des hydraulischen Systems, in welchen sich Dispersion befinden kann, nämlich keine Bauelemente, bei welchen bewegliche Teile dichtend aufeinander gepresst werden oder reiben, vorhanden sein, wie dies z.B. bei Ventilen oder Schläuchen mit Schlauchklemmen gegeben wäre. Vorzugsweise sind sogar in allen Bereichen des hydraulischen Systems, in welchen Dispersion enthalten sein kann, das sind insbesondere der Dispersionskreislauf, das Probenbad und der Ablauf, keine dichtenden Bauteile mit aneinander reibenden Dichtflächen zwischen denen Dispersionspartikel sitzen können, wie z.B. Ventile und/oder andere dichtende Bauelemente, wie geklemmte Schläuche vorhanden. Lediglich im Frischmediumszulauf kann ein Ventil vorhanden sein, was unproblematisch ist, da hier lediglich das reine Dispersionsmedium, z.B. Frischwasser, noch ohne disperse Phase bzw. noch ohne Partikel eingeleitet wird.

Ggf. kann also mit Ausnahme des Frischmediumszulaufs auf Ventile im hydraulischen System verzichtet werden. Trotzdem kann eine totraumfreie Messung und Spülung gewährleistet werden.

In vorteilhafter Weise kann dadurch der Verschleiß an dichtenden Bauteilen, wie z.B. Ventilen reduziert werden, was einen positiven Beitrag zur Lebensdauer liefert und Wartungsaufwand reduzieren kann.

Darüber hinaus bildet der, insbesondere ventilfreie und permanent offene, Ablauf in vorteilhafter Weise zusätzlich einen Überlauf für das Probenbad.

Vorzugsweise ist das Probenbad nach oben offen, so dass die disperse Phase, bzw. die Partikel separat in das Probenbad eingefüllt bzw. geschüttet werden kann, um dann in dem hydraulischen System mit dem Dispersionsmedium dispergiert zu werden. Selbstverständlich kann auch vordispergierte Dispersion in das Probenbad geschüttet werden.

Der Ablauf umfasst insbesondere eine Ablauföffnung in dem Probenbad, und in der Ablauf- und Spülstellung zielt die Strahlöffnung des Rücklaufelements auf die Ablauföffnung, derart, dass der Dispersionsstrahl, der aus der Strahlöffnung austritt, in die Ablauföffnung gerichtet ist.

Dadurch kann die Dispersion zielgerichtet in den Ablauf entleert werden, ohne dass ein Ventil im Ablauf erforderlich ist.

Mit anderen Worten ist in der Ablauf- und Spülstellung das Rücklaufelement nicht fluiddicht mit der Ablauföffnung verbunden, sondern die Dispersion ist als Freistrahl von der Strahlöffnung in die Ablauföffnung gerichtet. Von der Ablauföffnung führt dann vorzugsweise ein Rohrstück mit einem Schlauchanschluss nach außen aus dem Gehäuse der Nassdispergiervorrichtung. An den Schlauchanschluss kann dann ein handelsüblicher Schlauch angeschlossen werden, welcher die Dispersion in ein Waschbecken oder einen Sammelbehälter leitet, wobei der Ablauf zwischen der Ablauföffnung und dem Ende des Schlauches permanent, insbesondere auch in der Kreislaufstellung und während die Dispersion im Kreislauf durch den Dispersionskreislauf gepumpt wird, offen ist und insbesondere kein Ventil bzw. keine Schlauchklemmung enthält, so dass keine Partikel der dispersen Phase zwischen beweglichen Oberflächen eingequetscht werden und dort für Abrieb oder Verschleiß sorgen können.

In der Kreislaufstellung zielt die Strahlöffnung des Rücklaufelements vorzugsweise in das Probenbad, derart, dass die Dispersion, die aus der Strahlöffnung austritt, in das Probenbad gerichtet ist, wobei die Strahlöffnung bevorzugt in die in dem Probenbad befindliche Dispersion eintaucht.

Vorzugsweise ist ein Stellmotor, z.B. ein Getriebemotor umfasst, mittels welchem die relative Bewegung zwischen dem Rücklaufelement und dem Probenbad angetrieben wird, um motorisch angetrieben zwischen der Kreislaufstellung und der Ablauf- und Spülstellung hin und her zu schalten.

Gemäß einer bevorzugten Ausführungsform der Erfindung ist das Rücklaufelement, z.B. in Form eines Rücklaufrohres, schwenkbar an dem Probenbad gelagert, um das Rücklaufrohr bzw. die Strahlöffnung in der Kreislaufstellung in das Probenbad und in der Ablauf- und Spülstellung auf die Ablauföffnung zu richten, indem das Rücklaufelement bzw. das Rücklaufrohr zwischen der Kreislaufstellung und der Ablauf- und Spülstellung hin und her geschwenkt wird.

Dies hat sich im Rahmen der speziellen räumlichen Gegebenheiten eines Probenbads einer Nassdispergiervorrichtung als vorteilhaft erwiesen.

Es ist jedoch auch denkbar, ein zweiteiliges Probenbad mit einer ersten Wanne für die Kreislaufstellung bzw. Zirkulation und einer zweiten Wanne für mit dem Auslauf bereit zu stellen, wobei die beiden Wannen durch eine Wand voneinander getrennt sind und das Probenbad z.B. unter dem Rücklaufelement bzw. unter der Strahlöffnung hin und her geschoben wird, so dass das Rücklaufelement in der Kreislaufstellung in die erste Wanne und in der Ablauf- und Spülstellung in die zweite Wanne strahlt.

Ferner kann es zweckmäßig sein, wenn eine Steuereinrichtung vorgesehen ist, welche den Schwenkantrieb derart antreibt, dass das Rücklaufelement in der Kreislaufstellung kontinuierlich über den Boden des Probenbades geschwenkt wird. Hierdurch kann eine unerwünschte Sedimentation der dispersen Phase auf einem Boden des Probenbades vermindert werden.

Das vorzugsweise starre Rücklaufrohr weist insbesondere ein flussabwärts gelegenes offenes Ende, welches die Strahlöffnung in Form einer Austrittsdüse für die Dispersion bildet und/oder eine flussaufwärts gelegene Eintrittsöffnung auf, wobei ein flexibler Schlauch an die flussaufwärts gelegene Eintrittsöffnung angeschlossen ist, um die Schwenkbewegung des Rücklaufrohres bewerkstelligen zu können.

Demzufolge weist das Rücklaufrohr vorzugsweise einen L-förmigen Abschnitt auf, mit einem Schwenkschenkel, einem Halteabschnitt und einem dazwischen angeordneten abgewinkelten Knieabschnitt auf, wobei sich der Schwenkschenkel von dem Knieabschnitt bis zu der Austrittsdüse erstreckt, und wobei das Rücklaufrohr an der, dem Schwenkschenkel gegenüberliegenden Seite des Knieabschnitts, mittels einer Fassung an dem Halteabschnitt gehalten wird.

Vorzugsweise wird das Rücklaufrohr, vorzugsweise aus Edelstahl, mittels der Fassung von der Kreislaufstellung in die Ablauf- und Spülstellung und umgekehrt geschwenkt.

Dies hat den Vorteil, dass das Rücklaufrohr stromaufwärts des Knieabschnitts z.B. mit einer Kunststoff-Klemmfassung geklemmt werden kann und mit einem Stellmotor, z.B. einem Getriebemotor um eine im Wesentlichen horizontale Achse gedreht und dadurch der Schwenkschenkel auf und ab geschwenkt werden kann.

In der Kreislaufstellung verläuft das Rücklaufrohr in Richtung zur Austrittsdüse schräg nach unten in die in dem Probenbad befindliche Dispersion, wobei das Rücklaufrohr bzw. der Schwenkschenkel bevorzugt in die Dispersion eintaucht.

In der Ablauf- und Spülstellung ist der Schwenkschenkel im Vergleich zu der Kreislaufstellung nach oben geschwenkt, verläuft allerdings vorzugsweise noch immer leicht schräg nach unten.

Der Schwenkwinkel zwischen der Kreislaufstellung und der Ablauf- und Spülstellung kann etwa 45° +/- 30° betragen.

In der Kreislaufstellung ist die Strahlöffnung des Rücklaufrohrs bzw. die Austrittsdüse derart in das Probenbad gerichtet, dass der aus der Strahlöffnung des Rücklaufrohrs bzw. der Austrittsdüse austretende Dispersionsstrahl als Freistrahl in das Probenbad strahlt oder die Austrittsdüse des Rücklaufrohrs taucht in die in dem Probenbad befindliche Dispersion ein. Mit anderen Worten ist in der Kreislaufstellung die Strahlöffnung des Rücklaufelements nicht fluiddicht mit dem Probenbad verbunden.

Das Eintauchen in die Dispersion hat den Vorteil, dass ein gleichmäßiger Fluss in dem geschlossenen Dispersionskreislauf gewährleistet und unnötige Blasenbildung vermieden werden kann und/oder kaum Spritzer erzeugt werden.

Gemäß einer bevorzugten Ausführungsform ist ein Frischmediumszulauf, z.B. ein Frischwasser- oder Leitungswasseranschluss, umfasst, durch welchen frische Flüssigkeit als Dispersions- und/oder Spülmedium in das Probenbad eingefüllt wird, um einerseits in der Kreislaufstellung den Füllstand steuern zu können und/oder andererseits in der Ablauf- und Spülstellung Spülmedium zunächst durch das Probenbad und/oder dann durch den Dispersionskreislauf hindurch in den Ablauf zu pumpen und so das Probenbad und/oder den Dispersionskreislauf zu spülen. Vorzugsweise ist der Frischmediumszulauf permanent an einen Wasserhahn angeschlossen und in dem Frischmediumszulauf ist ein Proportionalventil eingebaut, mittels welchem der Eingangsdruck des Frischmediums auf einen gewünschten Sollwert reduziert werden kann.

Dies hat den Vorteil, dass unabhängig von einem möglicherweise von Ort zu Ort schwankenden Wasserdruck, der Eingangsdruck an der Nassdispergiervorrichtung stromabwärts des Proportionalventils auf einen gewünschten Wert eingestellt werden kann.

Vorzugsweise ist in den Frischmediumszulauf ein Durchflusssensor eingebaut, mittels welchem der Durchfluss des Frischmediums gemessen werden kann. Das Ausgangssignal des Durchflusssensors kann wiederum als Regelgröße zum Regeln des Proportionalventils rückgeführt werden, um unabhängig von dem Wasserdruck den gewünschten Durchfluss (Volumen/Zeit) einzustellen. Mit anderen Worten kann das Proportionalventil mittels der von dem Durchflusssensor ausgegebenen Messwerte in einem Regelkreis geregelt werden, um einen konstanten bzw. gewünschten Durchfluss zu erzielen.

Dies hat den Vorteil, dass der Durchfluss unabhängig vom Wasserdruck aktiv auf einen gewünschten Wert geregelt werden kann.

Vorzugsweise ist ein Füllstandsmesser zur Bestimmung des Füllstands der Dispersion in dem Probenbad umfasst. Dies kann z.B. ein über der Oberfläche der in dem Probenbad befindlichen Dispersion angeordneter Ultraschallsensor sein, welcher, z.B. mittels einer Laufzeitmessung, den Abstand zur Dispersionsoberfläche misst. Der Messwert des Füllstandsmessers kann zum Schließen des Proportionalventils und/oder zum aktiven Regeln der Füllstandshöhe in dem Probenbad verwendet werden.

Optional umfasst die Nassdispergiervorrichtung noch einen Ultraschallschwinger, welcher in Reihe in den Dispersionskreislauf, z.B. stromabwärts der Pumpe, geschaltet ist und das Dispergieren der Dispersion im Durchfluss durch den Ultraschallschwinger fördert.

Hierdurch kann ggf. eine unerwünschte Agglomeration der Partikel in der Dispersion vermindert werden.

Vorzugsweise umfasst das Probenbad eine obere Sammelwanne und eine unter der Sammelwanne angeordnete Pumpenkammer. Die Pumpe ist vorzugsweise als Zentrifugalpumpe ausgebildet, bei welcher in der Pumpenkammer ein Impeller rotiert. Hier reiben vorzugsweise keine Oberflächen, zwischen denen sich Dispersion befinden könnte, dichtend gegeneinander. Der Boden der Sammelwanne weist eine Öffnung auf, durch welche die Dispersion von der Sammelwanne in die Pumpenkammer fließt, um aus der Pumpenkammer wieder in den Dispersionskreislauf gepumpt zu werden. Der Boden der Sammelwanne verläuft vorzugsweise schräg nach unten auf die Öffnung zu, bzw. hat eine im Großen und Ganzen konische Formgebung mit einer zentralen Öffnung.

Die Pumpe ist bevorzugt als eine Zentrifugalpumpe bzw. Radialpumpe ausgebildet und der Pumpenmotor ist oberhalb des Probenbades angeordnet. Von dem Pumpenmotor erstreckt sich eine vertikale Pumpenantriebswelle nach unten durch die zentrale Öffnung in dem Boden der Sammelwanne in die Pumpenkammer hinein, um das in der Pumpenkammer befindliche Pumpenrad, z.B. einen Impeller anzutreiben. Alle beweglichen Teile weisen dabei vorzugsweise hinreichend Spiel zu statischen Teilen auf, so dass kein Reiben mit Partikeln aus der dispersen Phase erfolgt.

Dies hat den Vorteil, dass auch für den Pumpenantrieb keine rotierenden Dichtungen bzw. keine aneinander reibenden Oberflächen vorhanden sind, zwischen welchen sich Partikel der dispersen Phase befinden könnten.

Der Schwenkschenkel des Rücklaufrohrs verläuft dabei in der Kreislaufstellung vorzugsweise windschief zu der Pumpenantriebswelle.

Die Erfindung betrifft auch eine Nassdispergier-Baugruppe mit der erläuterten Nassdispergiervorrichtung, dem Dispersionskreislauf, durch welchen in der Kreislaufstellung die Dispersion im Kreislauf gepumpt wird und wobei das Probenbad als Vorratsbehälter für die Dispersion dient, und einer Messzelle in dem Dispersionskreislauf, um die Dispersion in der Messzelle im Durchfluss optisch zu untersuchen.

Die Erfindung betrifft ferner ein (Laser-)Partikelgrößenmessgerät zur Untersuchung der Partikelgrößenverteilung der in der Dispersion dispergierten Partikel, umfassend
die Nassdispergiervorrichtung, z.B. als Modul,
den Dispersionskreislauf durch welchen in der Kreislaufstellung die Dispersion im Kreislauf gepumpt wird, wobei das Probenbad als Vorratsbehälter für die Dispersion dient,
die Messzelle in dem Dispersionskreislauf, um die Dispersion in der Messzelle im Durchfluss optisch zu untersuchen, und
optische Komponenten zur Erzeugung von Streu-/Beugungsmustern an den Partikeln in der die Messzelle durchströmenden Dispersion, wie z.B. einen Laser zum Erzeugen des Primärlichts und eine Detektoranordnung zum Nachweisen des Streu-/Beugungslichts.

Gemäß einem allgemeinen Aspekt der Erfindung wird eine Nassdispergiervorrichtung, insbesondere für Laserpartikelgrößenmessgeräte, bereitgestellt, welche Folgendes umfasst:
ein Probenbad für eine Dispersion mit flüssigem Dispersionsmedium,
einen Vorlauf bzw. Vorlaufanschluss zum Einleiten der Dispersion aus dem Probenbad in einen Dispersionskreislauf mit einer Messzelle,
einen Rücklauf bzw. Rücklaufanschluss zum Rückführen der Dispersion aus dem Dispersionskreislauf in das Probenbad,
eine Pumpe zum Pumpen der Dispersion durch den Dispersionskreislauf,
einen Ablauf mit einer Ablauföffnung in dem Probenbad zum Ausleiten der Dispersion aus dem Dispersionskreislauf, um den Dispersionskreislauf zu leeren und/oder zu spülen.

Das Probenbad umfasst ferner eine obere Sammelwanne und eine unter der Sammelwanne angeordnete Pumpenkammer, wobei der Boden der Sammelwanne eine Öffnung aufweist, durch welche die Dispersion in die Pumpenkammer fließt, um aus der Pumpenkammer in den Dispersionskreislauf gepumpt zu werden. Die Pumpe ist als eine Zentrifugalpumpe bzw. Radialpumpe ausgebildet und der Pumpenmotor ist oberhalb des Probenbades angeordnet. Von dem Pumpenmotor erstreckt sich eine vertikale Pumpenantriebswelle nach unten durch die zentrale Öffnung in dem Boden der Sammelwanne in die Pumpenkammer hinein, um ein in der Pumpenkammer befindliches Pumpenrad, z.B. einen Impeller anzutreiben.

Gemäß diesem Aspekt der Erfindung ist eine Motorhaube über den Pumpenmotor gestülpt, um den Pumpenmotor einzuhäusen, wobei die Motorhaube mittels einer Führung an der Nassdispergiervorrichtung geführt und durch den Benutzer abnehmbar ist, um von oben an den Pumpenmotor zu gelangen. Ferner können das Probenbad und das Rücklaufelement bei abgenommener Motorhaube leichter gereinigt werden.

Vorzugsweise sind hierzu Führungsrollen für die Motorhaube z.B. an dem Gehäuse der Nassdispergiervorrichtung befestigt. Die Führungsrollen weisen vorzugsweise Dämpfungselemente aus elastomerem Material auf, um die Klappergeräusche im Pumpenbetrieb zu vermeiden.

Vorzugsweise hält im Betriebszustand ein Magnethalter die Motorhaube magnetisch fest, so dass der Benutzer zu Abnehmen der Motorhaube einerseits zunächst die Magnetkraft überwinden muss, das Abnehmen der Motorhaube durch den Benutzer aber andererseits werkzeuglos erfolgen kann.

Gemäß einem weiteren Aspekt der Erfindung wird eine Nassdispergiervorrichtung, insbesondere für Laserpartikelgrößenmessgeräte, bereit gestellt, welche folgende Bauteile umfasst:
ein Probenbad für eine Dispersion mit flüssigem Dispersionsmedium,
einen Vorlauf bzw. Vorlaufanschluss zum Einleiten der Dispersion aus dem Probenbad in einen Dispersionskreislauf mit einer Messzelle,
einen Rücklauf bzw. Rücklaufanschluss zum Rückführen der Dispersion aus dem Dispersionskreislauf in das Probenbad,
eine Pumpe zum Pumpen der Dispersion durch den Dispersionskreislauf,
einen Ablauf mit einer Ablauföffnung in dem Probenbad zum Ausleiten der Dispersion aus dem Dispersionskreislauf, um den Dispersionskreislauf zu leeren und ggf. zu spülen, sowie
eine pH-Sonde zum Messen des pH-Wertes der Dispersion, insbesondere während die Dispersion durch den Dispersionskreislauf zirkuliert. Die pH-Sonde ist vorzugsweise an dem Probenbad angeordnet und misst den pH-Wert der in dem Probenbad befindlichen Dispersion. Mit der pH-Sonde kann demnach der pH-Wert der Dispersion in dem Dispersionskreislauf, insbesondere vor und/oder während einer Partikelgrößenmessung, bestimmt und überwacht werden. Der so gemessene pH-Wert der Dispersion kann z.B. als Regelgröße rückgekoppelt werden, z.B. um den pH-Wert der Dispersion in einem vordefinierten pH-Wert-Sollintervall einzuregeln oder Betriebsparameter des Nassdispergiergeräts oder des Dispersionskreislaufs automatisch zu steuern.

Es hat sich herausgestellt, dass sich dispergierte Proben bei unterschiedlichen pH-Werten unterschiedlich verhalten können. Sogar pH-Wert-Unterschiede im Leitungswasser können bereits so bedeutsam sein, dass sich diese auf das Verhalten der Probe auswirken. Es wurde ferner herausgefunden, dass sich das Verhalten der einzelnen Partikel in der Dispersion als auch das Verhalten der Gesamtheit der dispersen Phase in Abhängigkeit vom pH-Wert der Dispersion verändern kann. Z.B. kann die Agglomeration der Partikel der dispersen Phase durch den pH-Wert beeinflusst werden. Ferner können pudrige Proben dazu neigen, aufzuflocken, was dazu führen kann, dass das aufgeflockte Puder an der Oberfläche im Probenbad schwimmt und nicht mehr optimal dispergiert werden kann. Dies kann z.B. durch die Zugabe von Tensiden vermieden oder verringert werden.

In vorteilhafter Weise ermöglicht die pH-Sonde nun eine Kontrolle und laufende Überwachung des pH-Wertes der Dispersion im Probenbad, während die Dispersion durch den Dispersionskreislauf zirkuliert. Es kann demnach insbesondere während der Partikelgrößenmessung der pH-Wert der Dispersion überwacht werden. Dadurch können in vorteilhafter Weise Messergebnisse besser reproduziert werden und neue Erkenntnisse über das Dispersionsverhalten gewonnen werden. Auch die Zugabe von Tensiden kann hiermit präziser und kontrollierter erfolgen.

Es kann ferner ein Messgerät umfasst sein, an welches die pH-Sonde angeschlossen ist und welches den pH-Wert elektronisch ausgibt und/oder optisch anzeigt. Der elektronisch ausgegebene pH-Wert in Form von entsprechenden Daten kann als Steuergröße zur Steuerung von Betriebsparametern der Nassdispergiervorrichtung verwendet werden.

Ferner kann das Messgerät an eine Steuer- und Auswerteeinrichtung des Partikelgrößenmessgeräts gekoppelt sein und die gemessenen pH-Wert-Daten werden in die Steuerung des Partikelgrößenmessgeräts eingespeist. Ferner kann ein Speicher umfasst sein, welcher die gemessenen pH-Werte während der Zirkulation der Dispersion fortlaufend speichert.

Bevorzugt befindet sich die pH-Sonde in dem Probenbad und taucht in die in dem Probenbad befindliche Dispersion ein.

Vorzugsweise ist das Probenbad nach oben offen, so dass die disperse Phase von oben in das Probenbad geschüttet werden kann. Insbesondere ist eine Sondenhalterung am Probenbad umfasst, welche z.B. am offenen oberen Rand des Probenbades angeordnet ist, um die pH-Sonde zu befestigen, wobei die pH-Sonde z.B. mit ihrem unteren Ende in die Dispersion in dem Probenbad eintaucht.

Gemäß einer bevorzugten Ausführungsform kann die pH-Sonde und ggf. die Sondenhalterung als Nachrüstteil ausgebildet sein, so dass der Benutzer sich auch nach dem Kauf der Nassdispergiervorrichtung noch dazu entscheiden kann, die pH-Sonde nachzurüsten. Hierzu sind z.B. am oberen Rand des Probenbades ein Ausschnitt und ein Gewinde vorgesehen, an welche die Sondenhalterung, z.B. mit nur einer Schraube und einer formschlüssigen Verdrehsicherung angeschraubt werden kann. Die pH-Sonde wiederum kann dann in die Sondenhalterung eingesetzt und ggf. eingeklemmt werden, so dass die pH-Sonde für den Benutzer mit der Probenhalterung lösbar an dem Probenbad befestigt wird.

Zweckmäßig ist die pH-Sonde stabförmig ausgebildet und erstreckt sich vom oberen Rand bis in den unteren Bereich des Probenbades, wobei die pH-Sonde mit ihrem unteren Ende in die Dispersion in dem Probenbad eintaucht.

Vorzugsweise weist die Nassdispergiervorrichtung eine Zuführeinrichtung auf, welche automatisch mittels der pH-Messwerte gesteuert wird und der Dispersion einen Stoff zuführt, welcher den pH-Wert der Dispersion verändert, um pH-Wert der Dispersion automatisch geregelt auf einen vorbestimmten Wert einzustellen.

Gemäß einer bevorzugten Ausführungsform ist ein Temperatursensor enthalten, welcher die Temperatur der Dispersion misst. Vorzugsweise weist die Nassdispergiervorrichtung eine Heizeinrichtung auf, mittels welcher die Dispersion geheizt werden kann. Die Heizeinrichtung kann insbesondere automatisch mittels der Messwerte des Temperatursensors geregelt werden.

In Kombination mit anderen Bauteilen in dem Probenbad, hat es sich als vorteilhaft erwiesen, wenn sich die stabförmige pH-Sonde vom oberen Rand des Probenbades schräg nach unten in die in dem Probenbad befindliche Dispersion erstreckt.

Gemäß einer Ausführungsform der Erfindung umfasst das Probenbad eine obere Sammelwanne und eine unter der Sammelwanne angeordnete Pumpenkammer. Der Boden der Sammelwanne weist eine Öffnung auf, durch welche die Dispersion aus der Sammelwanne in die Pumpenkammer fließt, um aus der Pumpenkammer in den Dispersionskreislauf gepumpt zu werden. Der pH-Messsensor ist dabei vorzugsweise an einer unteren Spitze der pH-Sonde angeordnet und wird in einem Abstand über dem Boden der Sammelwanne positioniert.

Es hat sich gezeigt, dass eine Beabstandung des pH-Messsensors vom Boden der Sammelwanne in vorteilhafter Weise besonders verlässliche Messwerte über den pH-Wert der Dispersion in dem Dispersionskreislauf liefert.

Die Pumpe ist vorzugsweise als eine Zentrifugalpumpe bzw. Radialpumpe ausgebildet und der Pumpenmotor ist oberhalb des Probenbades angeordnet. Die Pumpenantriebswelle erstreckt sich von dem Pumpenmotor vertikal nach unten durch die zentrale Öffnung in dem Boden der Sammelwanne in die Pumpenkammer unterhalb der Sammelwanne hinein und treibt ein in der Pumpenkammer befindliches Pumpenrad, z.B. in Form eines Impellers, an. Bei dieser Art von Probenbädern hat es sich als vorteilhaft gezeigt, wenn sich die stabförmige pH-Sonde windschief zu der Pumpenantriebswelle erstreckt. Bei Verwendung eines schwenkbar gelagerten Rücklaufrohres erstreckt sich die stabförmige pH-Sonde zusätzlich windschief zu dem Rücklaufrohr und/oder ist auf der dem Rücklaufrohr gegenüberliegenden Seite der Pumpenantriebswelle angeordnet.

Die Erfindung betrifft auch eine Nassdispergier-Baugruppe umfassend
die erläuterte Nassdispergiervorrichtung,
den Dispersionskreislauf durch welchen in der Kreislaufstellung die Dispersion im Kreislauf gepumpt wird, wobei das Probenbad als Vorratsbehälter für die Dispersion dient, und
die Messzelle in dem Dispersionskreislauf, um die Dispersion in der Messzelle im Durchfluss optisch zu untersuchen.

Die Erfindung betrifft ferner ein (Laser-)Partikelgrößenmessgerät zur Untersuchung der Partikelgrößenverteilung der in der Dispersion dispergierten Partikel, umfassend
die Nassdispergiervorrichtung, z.B. als Modul,
den Dispersionskreislauf durch welchen in der Kreislaufstellung die Dispersion im Kreislauf gepumpt wird, wobei das Probenbad als Vorratsbehälter für die Dispersion dient,
die Messzelle in dem Dispersionskreislauf, um die Dispersion in der Messzelle im Durchfluss optisch zu untersuchen, und
optische Komponenten zur Erzeugung von Streu-/Beugungsmustern an den Partikeln in der die Messzelle durchströmenden Dispersion, wie z.B. einen Laser zum Erzeugen des Primärlichts und eine Detektoranordnung zum Nachweisen des Streu-/Beugungslichts.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sein und die Merkmale der verschiedenen Ausführungsbeispiele miteinander kombiniert werden können.

### Kurzbeschreibung der Figuren

Es zeigen:
- Fig. 1: eine dreidimensionale Ansicht von schräg rechts vorne auf eine erfindungsgemäße Ausführungsform der Nassdispergiervorrichtung,
- Fig. 2: eine dreidimensionale Ansicht von schräg links vorne auf die Ausführungsform aus Fig. 1,
- Fig. 3: eine dreidimensionale rückwärtige Ansicht des Probenbads mit dem Frischmediumszulauf,
- Fig. 4: eine dreidimensionale vorderseitige Ansicht des Probenbads aus Fig. 3,
- Fig. 5: eine Explosionsdarstellung des Probenbades von schräg links vorne,
- Fig. 6: eine Explosionsdarstellung des Probenbades aus Fig. 5 von schräg hinten unten,
- Fig. 7: eine Explosionsdarstellung des Einbaus des Probenbades in das Gehäuse der Nassdispergiervorrichtung,
- Fig. 8: eine Explosionsdarstellung der Nassdispergiervorrichtung von schräg links hinten mit dem Stellmotor für das Rücklaufrohr,
- Fig. 9: eine dreidimensionale Ansicht schräg von oben in das Probenbad in der Kreislaufstellung,
- Fig. 10: eine dreidimensionale Ansicht von schräg rechts vorne auf das Probenbad in der Ablauf- und Spülstellung,
- Fig. 11: eine Draufsicht von oben auf das Probenbad,
- Fig. 12: einen Querschnitt entlang der Schnittlinie E-E in Fig. 9 in der Ablauf- und Spülstellung,
- Fig. 13: wie Fig. 12, aber in der Kreislaufstellung,
- Fig. 14: wie Fig. 13, aber beim Schwenken des Rücklaufrohrs zur Verminderung der Sedimentation,
- Fig. 15: einen schematischen hydraulischen Schaltplan der Nassdispergier-Baugruppe mit der Nassdispergiervorrichtung und dem Dispersionskreislauf einschließlich der Messzelle,
- Fig. 16: eine dreidimensionale Darstellung des Probenbades mit Ultraschallschwinger zur Unterstützung des Dispergierens,
- Fig. 17: eine Explosionsdarstellung der Nassdispergiervorrichtung mit abnehmbarer Motorhaube,
- Fig. 18: einen schematischen hydraulischen Schaltplan der Nassdispergier-Baugruppe mit der Nassdispergiervorrichtung, dem Dispersionskreislauf einschließlich der Messzelle und dem Ultraschallschwinger zur Unterstützung des Dispergierens,
- Fig. 19: ein schematisches Blockschaltbild der Steuerung zur Befüllung des Probenbades, und
- Fig. 20: eine teilweise schematische Querschnittsdarstellung durch das Probenbad und die pH-Sonde.

### Detaillierte Beschreibung der Erfindung

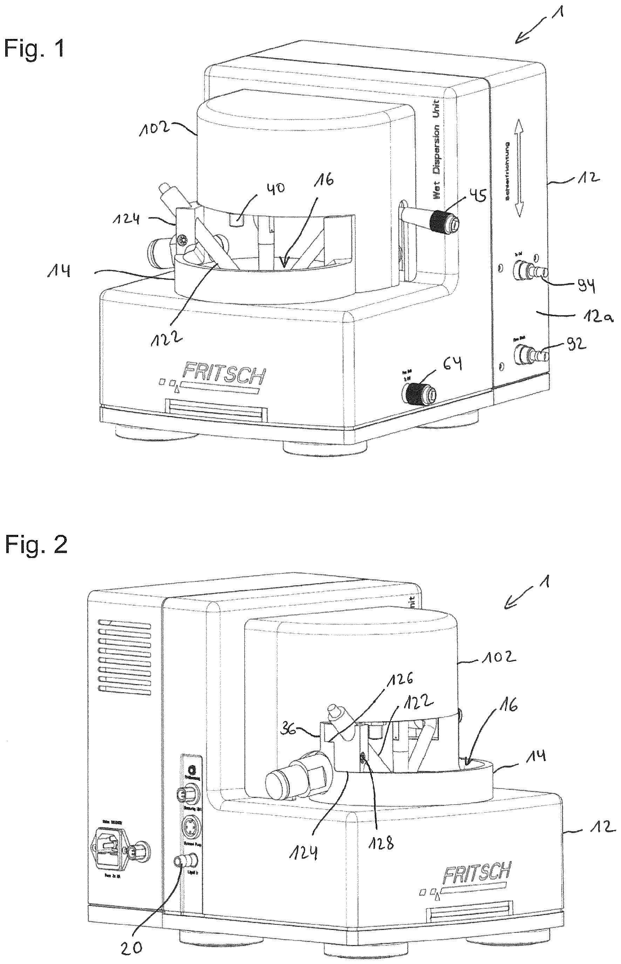

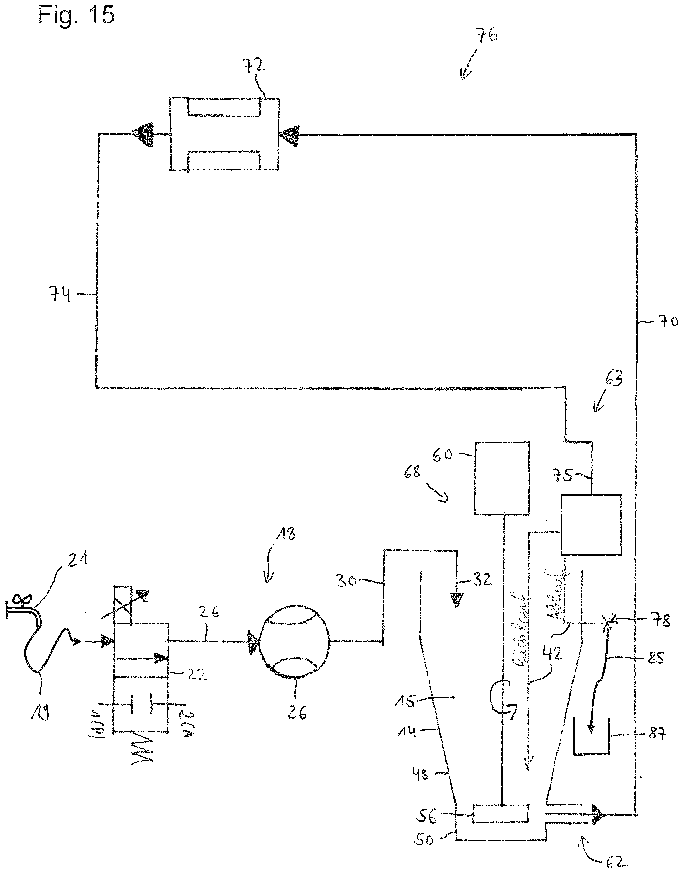

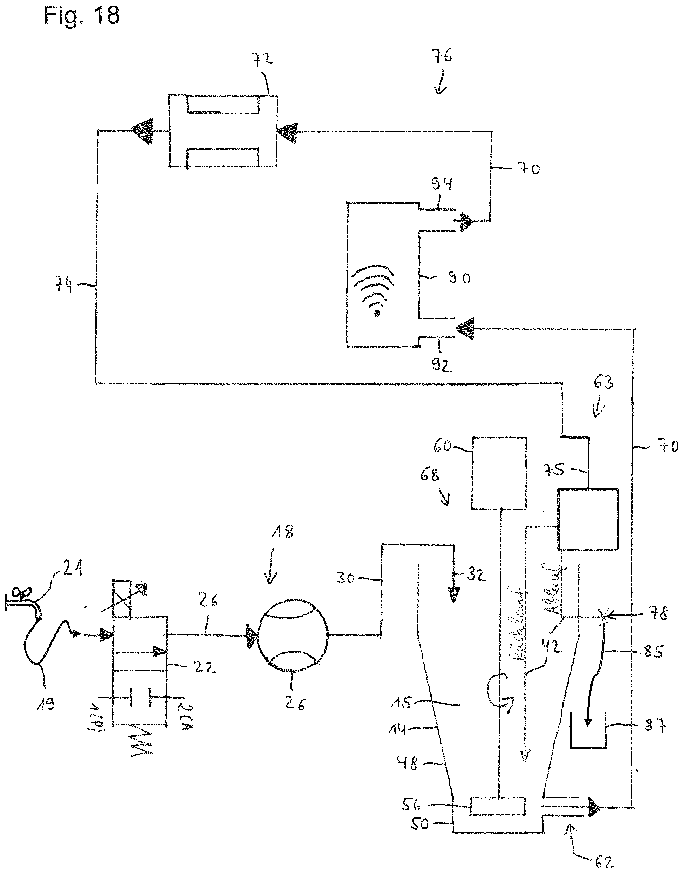

Bezug nehmend auf die Fig. 1 und 2 weist die Nassdispergiervorrichtung 1 ein Gerätegehäuse 12 auf, welches das Probenbad 14 sowie die übrigen Bauteile der Nassdispergiervorrichtung beherbergt. Das Probenbad 14 weist eine großflächige obere Öffnung 16 auf, in welche Dispersion oder disperse Phase, z.B. Probenpartikel von oben hinein geschüttet werden können. Partikelfreies Frischmedium als Dispersionsmedium oder zum Spülen kann über den Frischmediumszulauf 18 in die Nassdispergiervorrichtung 1 eingefüllt werden. Dabei ist der Anschlussstutzen 20 des Frischmediumszulaufs 18 mit einem flexiblen Schlauch 19, direkt mit einer Frischmediumsquelle, zum Beispiel mit einem Wasserhahn 21 verbunden (vgl. Fig. 15, 18).

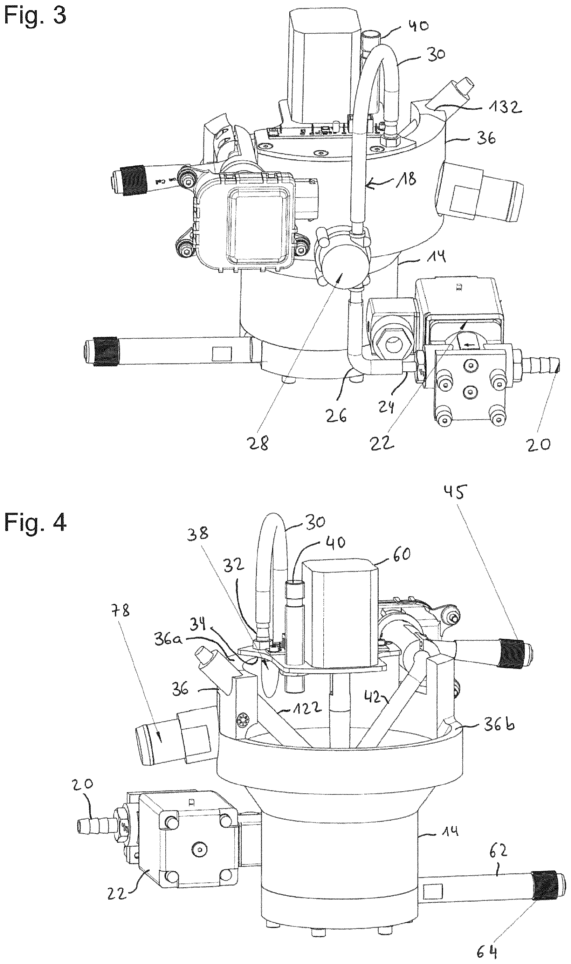

Bezug nehmend auf die Fig. 3 und 4 ist in den Frischmediumszulauf ein Proportionalventil 22 eingebaut, dessen Ausgang 24 über einen Schlauch 26 mit einem Durchflusssensor 28 verbunden ist. Von dem Durchflusssensor 28 führt ein Schlauch 30 zu einem Einlauf 32. Der Frischmediumszulauf 18 mündet am unteren Ausgang 34 des Einlauf 32 im Bereich einer Ringwandung 36 in das Probenbad 14, so dass von dort das Frischmedium in das Probenbad 14 einströmen kann. Der Auslass des Frischmediumszulaufs 18 bzw des Einlaufs 32 in das Probenbad 14 mündet nach unten in eine Einkerbung 38 in der Ringwandung 36, welche ein laminares Einströmen des Frischmediums in das Probenbad 14 unterstützt. Hierdurch wird ein unerwünschtes Spritzen oder Sprudeln beim Einfüllen des Frischmediums gemindert.

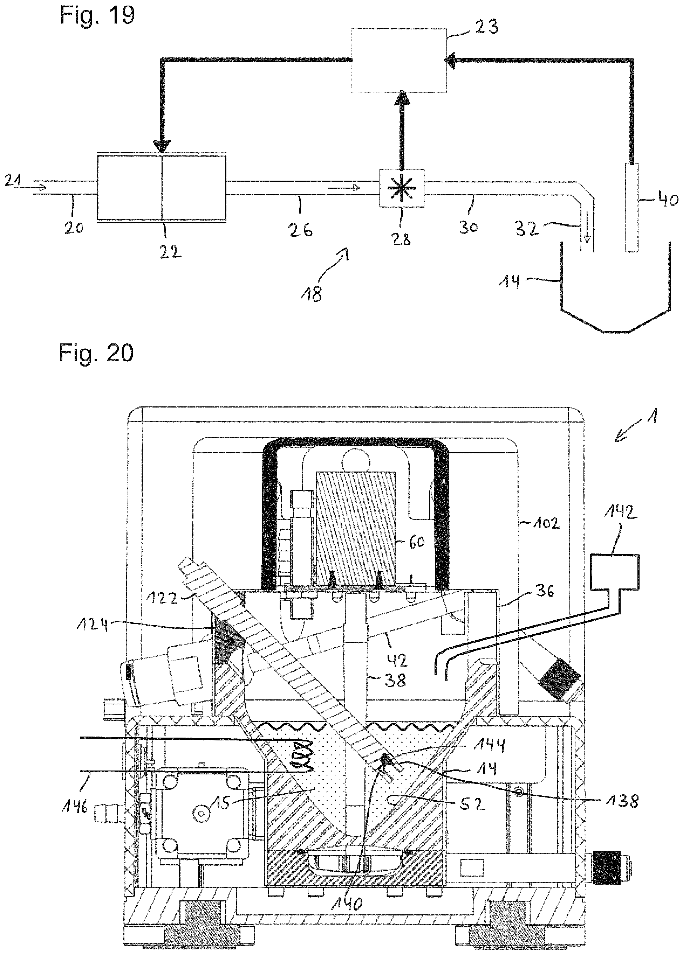

Bezug nehmend auf Fig. 19 misst der Durchflusssensor 28 beim Einfüllen des Frischmediums den Frischmediumsstrom in Form der aktuellen Volumenmenge (Volumen/Zeit), die durch das Proportionalventil 22 fließt. Eine Steuereinrichtung 23 erfasst die Messwerte des Durchflusssensors 28 und regelt die Volumenmenge auf eine vorher festgelegte Strömungsgeschwindigkeit nach. Gleichzeitig misst ein Füllstandssensor 40 die Füllhöhe in dem Probenbad 14, wobei der Sollwert der Füllhöhe vom Benutzer gewählt werden kann, und schaltet das Proportionalventil 22 beim Erreichen des vordefinierten Füllhöhe-Pegels vorrangig ab. Der Messwert des Frischmediumsstroms wird demnach als Regelgröße über die Steuereinrichtung 23 an das Proportionalventil 22 zurückgekoppelt, um dieses zu regeln. Dadurch kann mittels des Proportionalventils 22 und des Durchflusssensors 28 ein konstanter Zustrom an Frischmedium gewährleistet werden, unabhängig von dem am Anschlussstutzen 20 anliegenden externen Wasserdruck, z.B. in der Wasserleitung bzw. an dem Wasserhahn 21.

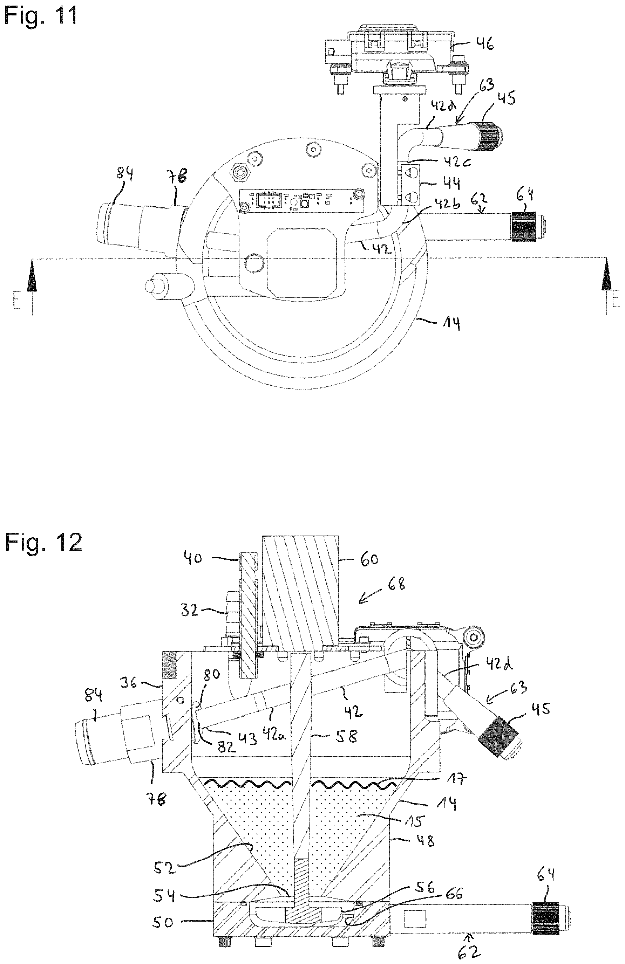

Der Füllstandssensor 40 befindet sich im oberen Bereich des Probenbades 14 und weist einen Ultraschallsensor auf. Dieser Ultraschall-Füllstandsensor 40 sendet Ultraschallsignale nach unten in Richtung der in dem Probenbad 14 befindlichen Dispersion 15 aus und ermittelt, z.B. über eine Laufzeitmessung, den momentanen Füllstand in dem Probenbad 14 (vgl. Fig. 12-14). Das Ende des Befüllens mit Frischmedium über den Frischmediumszulauf 18 und das Proportionalventil 22 wird wie vorstehend beschrieben mit den Messwerten des Füllstandsensors 40 gesteuert. Sobald der Füllstandsensor 40 den gewünschten Füllstand misst, wird das Proportionalventil 22 in Ansprechen auf ein entsprechendes Ausgangssignal des Füllstandsensors 40 geschlossen.

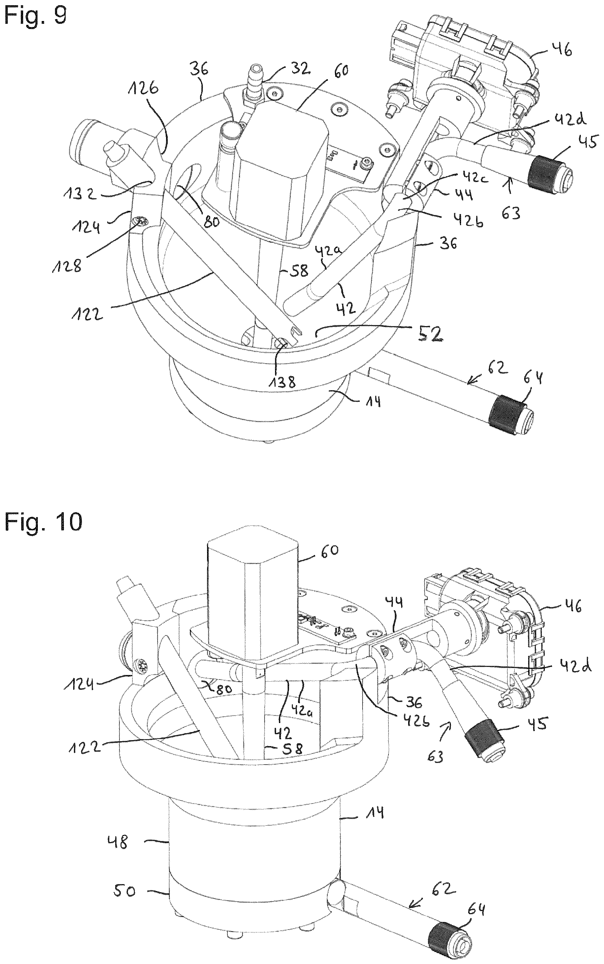

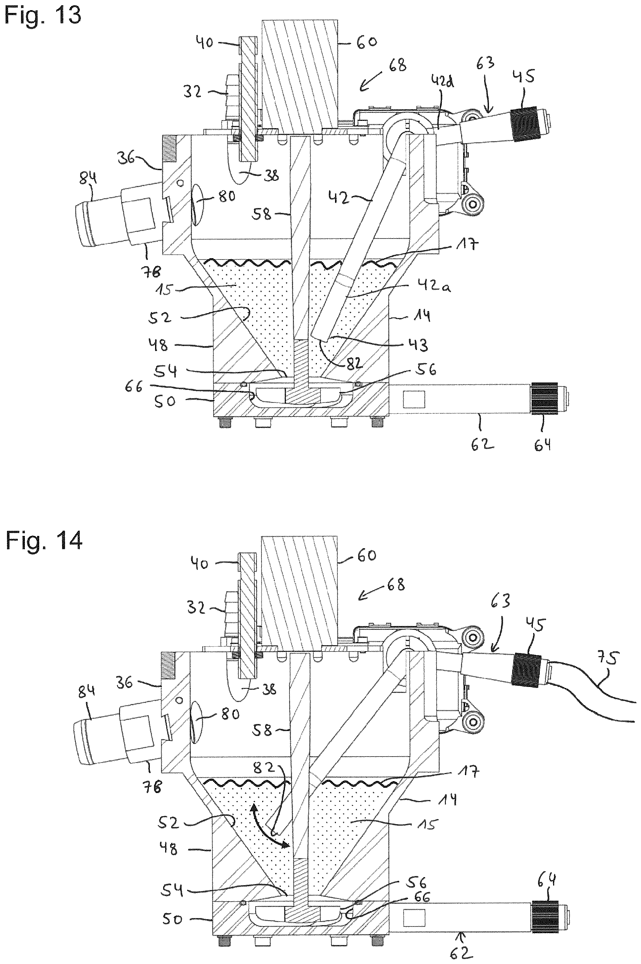

Bezug nehmend auf die Fig. 9 bis 14 umfasst die Nassdispergiervorrichtung 1 ein Rücklaufrohr 42, welches mit einer Rohrfassung 44 im oberen Bereich des Probenbades 14 im Bereich der Ringwandung 36 gehalten wird. Die klemmende Rohrfassung bzw. Klemmfassung 44 wird von einem Stellmotor 46 rotiert, um das Rücklaufrohr 42 in dem Probenbad 14 hin und her zu schwenken. In dem gezeigten Beispiel ist das Rücklaufrohr 42 mit der Rohrfassung 44 an dem Stellmotor 46 aufgehängt und läuft berührungslos in der Ringwandung 36. Die Rohrfassung 44 kann allerdings auch in der Ringwandung 36 gelagert sein. Das Rücklaufrohr 42 kann dabei zwischen der in Fig. 9 und 13 dargestellten Kreislaufstellung und der in Fig. 10 und 12 dargestellten Ablauf- und Spülstellung hin und her bzw. auf und ab geschwenkt werden. In der Kreislaufstellung taucht das untere Ende 43 des Rücklaufrohrs 42 vorzugsweise in die Dispersion 15 in dem Probenbad 14 ein. Dadurch ist der Kreislauf für die Dispersion 15 geschlossen.

Das Probenbad 14 besteht aus einer oberen Sammelwanne 48 und einer darunter befindlichen Pumpenkammer 50, die einen Sumpf für die Dispersion 15 bildet. Die Sammelwanne 48 weist einen relativ steilen konischen Wannenboden 52 auf, was unerwünschter Sedimentation der dispersen Phase entgegenwirken kann. Der Wannenboden 52 erstreckt sich unterhalb der Ringwandung 36 und mündet unten in eine zentrale Öffnung 54, durch welche die Dispersion 15 aus der Sammelwanne 48 in die Pumpenkammer 50 hinein fließt. In der Pumpenkammer 50 rotiert ein Impeller 56, welcher über eine Antriebswelle 58 von einem Antriebsmotor 60 angetrieben wird und die Dispersion 15 als Zentrifugalpumpe in den Vorlauf 62 des Dispersionskreislaufs pumpt. Der Vorlauf 62 umfasst im vorliegenden Beispiel ein starres an die Pumpenkammer 50 angeschraubtes Rohr mit einem Anschlussstutzen 64. Der Impeller 56 ist kleiner als der Innenraum 66 der Pumpenkammer 50 und berührt die Wände des Innenraums 66 nicht, sodass durch die Dispersion 15 verursachter Verschleiß weitgehend vermieden werden kann.

Wenn die von der Pumpenkammer 50, dem Impeller 56, der Antriebswelle 58 und dem Motor 60 gebildete Pumpe 68 in Betrieb ist, wird also die Dispersion 15 aus den Probenbad 14, genauer aus der Pumpenkammer 50 in den Vorlauf 62 gepumpt. Bezug nehmend auf die Fig. 15 zirkuliert in dieser Stellung die Dispersion 15 über eine Vorlaufleitung 70 durch die Messzelle 72 und über eine Rücklaufleitung 74 in den das Rücklaufrohr 42 umfassenden Rücklauf 63 und von dort wieder in das Probenbad 14, d. h. zirkuliert durch den so gebildeten Dispersionskreislauf 76. Die Rücklaufleitung 74 ist dazu über eine Anschlusskupplung 45 an das stromaufwärts liegende Ende des Rücklaufrohrs 42 angeschlossen, um die Dispersion über den so gebildeten Rücklauf 63 wieder in das Probenbad 14 zurückzuleiten (vgl. Fig. 9-14).

Wenn die Messung in der Messzelle 72 beendet ist, soll die Dispersion 15 aus dem Probenbad 14 und dem Dispersionskreislauf 76 entfernt werden und der Dispersionskreislauf 76 und das Probenbad 14 sollen mit Frischmedium gespült werden. Hierzu wird das Rücklaufrohr 42, angetrieben von dem Stellmotor 46 über die Klemmfassung 44, welche eine Antriebswelle für die Schwenkbewegung bildet, im Uhrzeigersinn um einen bestimmten Winkel (im vorliegenden Beispiel etwa 45°) nach oben geschwenkt, soweit bis sich das untere Ende 43 des Rücklaufrohrs 42 vor dem Auslauf oder Ablauf 78, genauer vor der Auslauf- oder Ablauföffnung 80, welche als Bohrung in der Ringwandung 36 der Sammelwanne 48 vorgesehen ist, befindet. Diese Ablauf- und Spülstellung ist in den Fig. 10 und 12 dargestellt. In der Ablauf- und Spülstellung ist das Rücklaufrohr 42 vollständig aus der Dispersion 15 aufgetaucht. Die Pumpe 68 kann auch während des Schwenkprozesses kontinuierlich weiter pumpen.

In der Ablauf- und Spülstellung strahlt nun die Dispersion 15 aus der Strahlöffnung 82, welche eine Austrittsdüse an dem unteren Ende 43 des Rücklaufrohrs 42 bildet, als Freistrahl durch die Luft aus der Austrittsdüse 82 heraus und in die Ablauföffnung 80 hinein, anstatt wie in der Kreislaufstellung wieder zurück in das Probenbad 14 zu pumpen. Das Rücklaufrohr 42 bzw. die Austrittsdüse 82 sind in der in Fig. 12 dargestellten Ablauf- und Spülstellung demnach derart auf die Ablauföffnung 80 gerichtet, dass der Dispersionsstrahl in die Ablauföffnung 80 zielt, und zwar insbesondere als Freistrahl durch die Luft. Die so in die Ablauföffnung gestrahlte Dispersion 15 fließt anschließend durch den Ablauf 78, welcher in einem Anschlussstutzen 84 mündet über einen Abflussschlauch 85 zum Beispiel in ein Waschbecken oder einen Auffangbehälter 87 (vgl. Fig. 15, 18). Der gesamte Ablauf, insbesondere von der Ablauföffnung 80 über den Anschlussstutzen 84 und den Abflussschlauch 85, enthält keine Ventile, sondern ist permanent offen, auch wenn sich die Nassdispergiervorrichtung 1 in der Kreislaufstellung befindet und die Dispersion 15 durch den Dispersionskreislauf 76 zirkuliert. Solange das Rücklaufrohr 42 nicht so ausgerichtet ist, dass der aus der Austrittsdüse 82 austretende Dispersionsstrahl in die Ablauföffnung 80 in der Ringwandung 36 gerichtet ist, spielt dies keine Rolle, unter anderem, weil die Auslauföffnung 80 oberhalb des normalen Füllstandes der Dispersion 15 in dem Probenbad 14 angeordnet ist.

Durch diese Konstruktion kann die Verwendung von Ventilen oder anderen dichtenden Elementen vermieden werden, bei welchen Oberflächen gegeneinander dichten oder aufeinander gepresst werden und zwischen denen sich Partikel der Dispersion 15 sitzen können, insbesondere im Ablauf 78. Das einzige Ventil in dem hydraulischen System ist das Proportionalventil 22, welches jedoch im Frischmediumszulauf 18 sitzt und daher ausschließlich Flüssigkeit ohne disperse Phase steuert. Darüber hinaus bildet der Ablauf 78 mit der Ablauföffnung 80 auch einen Überlaufschutz für das Probenbad 14. Die Dispersion kann nämlich nicht über die Ablauföffnung 80 steigen, selbst dann nicht, wenn z.B. die Steuerelektronik oder das Ventil 22 für den Zulauf des Frischmediums defekt sein sollten.

Zum weiteren Spülen wird in der in den Fig. 10 und 12 dargestellten Ablauf- und Spülstellung des Rücklaufrohrs 42 das Proportionalventil 22 geöffnet, sodass einerseits die sich in dem hydraulischen System befindliche mehr und mehr verdünnende Dispersion 15 von der Pumpe 68 durch den Dispersionskreislauf 76 in den Ablauf 78 gepumpt wird. Dadurch wird einerseits die Dispersion 15 aus dem hydraulischen System in den Ablauf 78 ausgepumpt und gleichzeitig strömt über den Frischmediumszulauf 18 reine Flüssigkeit in das Probenbad 14 nach. Diese zuströmende Flüssigkeit wird sukzessive durch die Pumpe 68 ebenfalls durch den Dispersionskreislauf 76 gepumpt und verlässt anschließend durch den Ablauf 78 wieder das hydraulische System. Dieser Spülvorgang wird solange fortgeführt, bis das hydraulische System hinreichend gespült und anschließend entleert ist.

Dann wird das Rücklaufrohr 42 wieder in die in Fig. 13 dargestellte Kreislaufstellung zurückgeschwenkt und die Nassdispergiervorrichtung 1 ist bereit zum Einfüllen neuer Dispersion 15 für eine neue Messung mit der so gespülten Messzelle 72.

Bezug nehmend auf Fig. 14 kann das Rücklaufrohr in der Kreislaufstellung, d.h. während die Dispersion 15 durch den Dispersionskreislauf 76 zirkuliert, geringfügig hin und her geschwenkt werden, sodass der aus der Austrittsdüse 82 austretende Dispersionsstrahl innerhalb der Dispersion 15 in dem Probenbad 14, also nicht als Freistrahl in Luft, über den Boden 52 der Sammelwanne 48 streicht. Hierzu wird das Rücklaufrohr 42 bzw. dessen unteres freies Ende 43 während der Zirkulation durch den Dispersionskreislauf 76 über den Boden 52 geschwenkt. Hierdurch kann eventuelle Sedimentation auf dem Boden 52 mittels des aus dem Rücklaufrohr 42 unmittelbar in die Dispersion 15 austretenden Dispersionsstrahls weggefegt werden.

Das Rücklaufrohr 42 ist in dem vorliegenden Beispiel ein starres (Edelstahl-)Rohr, welches aus einem unteren Schwenkschenkel 42a, welcher in die Austrittsdüse 82 mündet, einem Knieabschnitt 42b und einem horizontal verlaufenden Halteabschnitt 42c sowie einem Anschlussabschnitt 42d, in welchen die Rücklaufleitung 74 mündet, besteht. Das Rücklaufrohr 42 wird von der Klemmfassung 44 an dem Halteabschnitt 42c geklemmt, sodass sich der unterhalb des Knieabschnitts 42b befindliche Schwenkschenkel 42a durch Drehung der Klemmfassung 44 hin und her bzw. auf und ab schwenken lässt. Die Abschnitte 42a, 42b und 42c des Rücklaufrohrs 42 bilden demnach eine L-Form. Die Rücklaufleitung 74 ist in dem Bereich, in welchem diese an das Rücklaufrohr 42 angeschlossen ist, als flexibler Schlauch 75 ausgebildet, um das Schwenken zu ermöglichen. Zum Anschluss des flexiblen Schlauchs weist der Anschlussabschnitt 42d des Rücklaufrohrs 42 eine Schlauchanschlusskupplung 45 auf.

In der Kreislaufstellung verläuft das Rücklaufrohr 42 hinter der Antriebswelle 58 schräg nach unten, also windschief zur Antriebswelle 58.

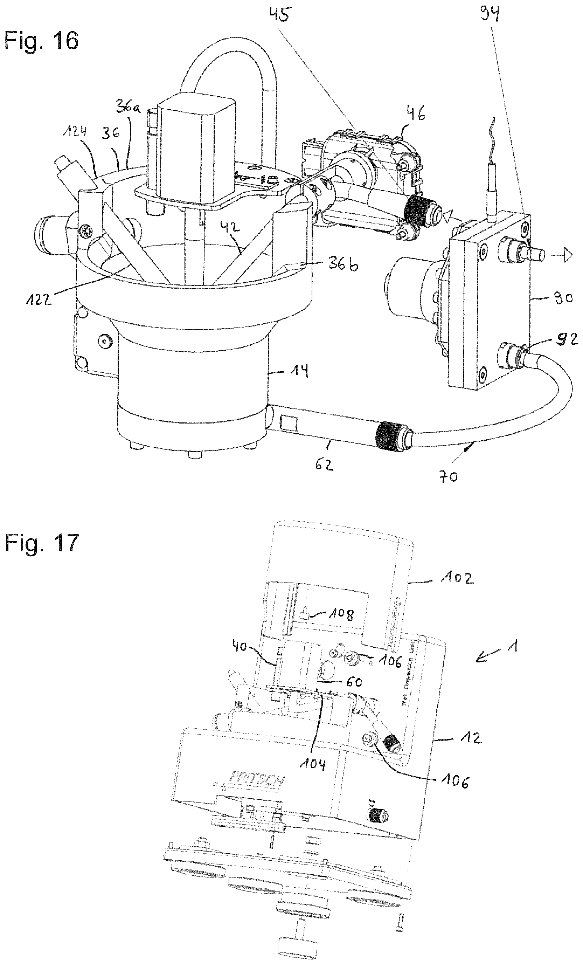

Bezug nehmend auf die Fig. 16 bis 18 kann optional ein Ultraschallschwinger 90 in den Dispersionskreislauf 76 eingebaut werden. Der Ultraschallschwinger 90 wird optional in das Gerätegehäuse 12 der Nassdispergiervorrichtung 1 eingebaut und weist einen Einlassanschluss 92 und einen Auslassanschluss 94 auf, welche an der Seite 12a des Gerätegehäuses 12 nach außen ragen (vgl. Fig. 1). Wenn der Dispersionskreislauf mit dem Ultraschallschwinger 90 betrieben werden soll, wird der Ultraschallschwinger 90 in die Vorlaufleitung 70 eingebaut, indem der Vorlauf 62 bzw. der Anschlussstutzen 64 mit dem Einlass 92 des Ultraschallschwingers 90 verbunden und der Auslass 94 wird mit dem Eingang der Messzelle 72 verbunden. Der Ultraschallschwinger 90 ist demnach in Serie in den Dispersionskreislauf 76 eingebaut und sendet Ultraschall in die im Durchfluss durch den Ultraschallschwinger 90 fließende Dispersion 15 und unterstützt damit das Dispergieren bzw. kann eine unerwünschte Agglomeration der dispersen Phase vermindern. Ferner unterstützt der Ultraschall eine Entgasung der Dispersion 15, wodurch unerwünschte Mikroblasen im Dispersionsmedium entfernt werden können.

Bezug nehmend auf Fig. 17 weist das Gerätegehäuse 12 der Nassdispergiervorrichtung 1 eine separate Motorhaube 102 auf, welche von oben über den Pumpenmotor 60 gestülpt wird und diesen sowie den Füllstandssensor 40 sowie weitere Bauteile, zum Beispiel elektronische Bauteile 104 beherbergt bzw. abdeckt.

Die Motorhaube 102 wird mittels an dem Gerätegehäuse 12 befestigten Führungsrollen 106 vertikal geführt und lässt sich so vom Benutzer werkzeuglos auf das Gerätegehäuse 12 und über den Motor 60 aufsetzen bzw. über den Motor 60 stülpen. Die Führungsrollen 106 als Führung sind mit elastomeren Material überzogen, um ein Rattern oder Klappern der Motorhaube 102 während des Betriebs zu verhindern.

Ferner sind an der Motorhaube 102 Magnethalter 108 angebracht, welche die Motorhaube 102 in der in Fig. 1 und 2 dargestellten Zielstellung magnetisch an der Nassdispergiervorrichtung 1 festhalten. Wenn der Benutzer die Motorhaube 102 abnehmen möchte, braucht er diese lediglich nach oben zu ziehen, dabei die Magnetkraft des oder der Magnethalter 108 zu überwinden, kann so die Motorhaube 102 ohne Werkzeug abziehen und gelangt damit an zumindest einige Bauteile der Nassdispergiervorrichtung 1, unter anderem an den Motor, zum Beispiel zur Reparatur, zur Wartung und/oder zur Reinigung.

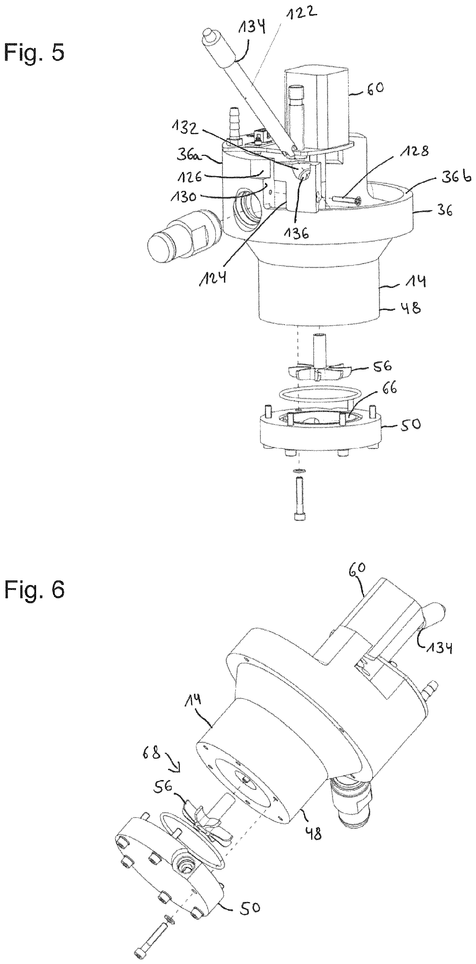

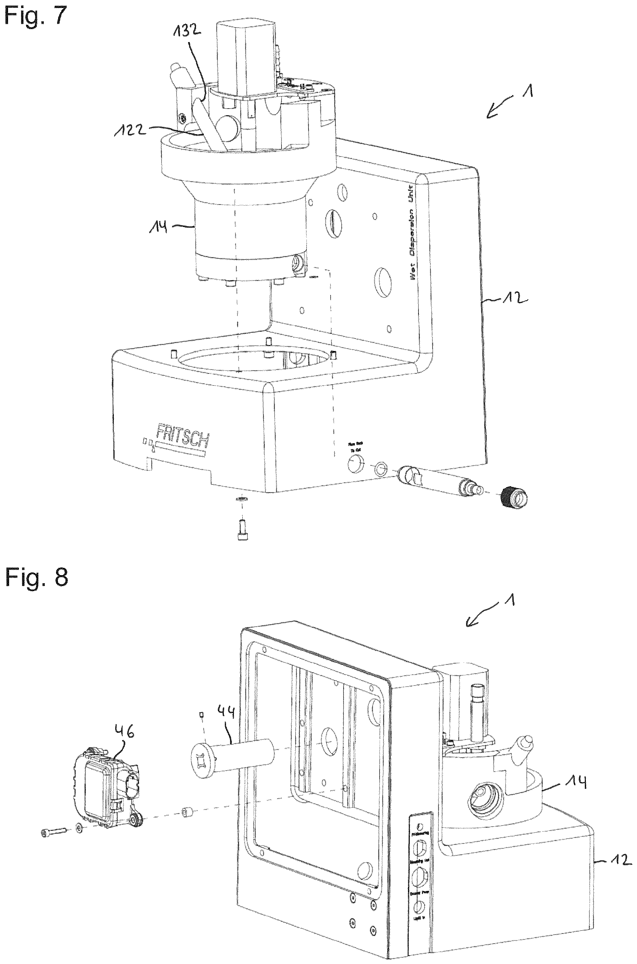

Wieder Bezug nehmend auf die Fig. 1 bis 10 und 20 erstreckt sich eine stabförmige pH-Sonde 122 vom oberen Bereich der Ringwandung 36 schräg nach unten in das Probenbad 14. Die pH-Sonde 122 wird mit einem Halteelement 124 an der oberen Ringwandung 36 befestigt. Das Halteelement 124 greift bei 126 formschlüssig in den oberen Bereich der Ringwandung 36 ein und wird mit einer Schraube 128 an der Ringwandung 36 befestigt. Die Ringwandung 36 ist im hinteren Bereich 36a etwas höher als im vorderen Bereich 36b. Mit anderen Worten ist Ringwandung 36 im vorderen Bereich 36b ausgespart und geht an einer Stufe 130 in den hinteren Bereich 36a über. Das Halteelement 124 wird vorzugsweise formschlüssig an der Stufe 130 befestigt. Ferner bildet so der vordere Bereich 36b der Ringwandung 36 zusammen mit der Motorhaube 102 ein gut zugängliches Einfüll-Fenster zum Einfüllen der Probenpartikel in das Probenbad 14.

Das Halteelement 124 weist eine schräg liegende Bohrung 132 auf, welche sich von außen nach innen schräg nach unten durch das Halteelement 124 erstreckt. Durch die Bohrung 132 wird die pH-Sonde 122 von schräg oben eingeführt und wird mit einem Ringanschlag 134, welcher mit einem Anschlag 136 innerhalb der Bohrung 132 zusammen wirkt, in Position gehalten.

Das untere freie Ende 138 der pH-Sonde 122 taucht in dem Probenbad 14, genauer in der Sammelwanne 48, in die Dispersion 15 ein, wenn das Probenbad 14 entsprechend mit Dispersion 15 befüllt ist. In dem unteren Ende 138 befindet sich der pH-Messsensor 140 der pH-Sonde 122.

Die stabförmige pH-Sonde 122 erstreckt sich windschief vor der Pumpenwelle 58 nach unten in das Probenbad 14. Mit anderen Worten liegen die pH-Sonde 122 und das Rücklaufrohr 42 auf gegenüberliegenden Seiten der Pumpenwelle 58, vorzugsweise jeweils windschief zu dieser. Dadurch kann der in dem Probenbad 14 zur Verfügung stehende Raum optimal ausgenutzt werden und die pH-Sonde 122 ist auch beim Schwenken des Rücklaufrohrs 42 nicht im Weg.

Die Nassdispergiervorrichtung 1 enthält noch eine Zuführeinrichtung 142 für einen pH-regulierenden Stoff, welcher mit dem pH-Messwert als Steuergröße von der Zuführeinrichtung 142 automatisch in die Dispersion 15 zugeführt wird. Somit wird also ein pH-Wert-Regelkreis gebildet.

Ferner enthält die pH-Sonde 122 einen Temperatursensor 144, der die Temperatur der Dispersion 15, in diesem Beispiel in dem Probenbad 14 misst. Damit kann der Einfluss der Temperatur auf den pH-Wert der Dispersion 15 untersucht werden. Die Kombination des pH-Messsensors 140 und des Temperatursensors 144 in der pH-Sonde 122 ist zwar praktisch, allerdings kann der Temperatursensor 144 auch an anderer Stelle in dem Dispersionskreislauf 76 angeordnet werden.

Das untere freie Ende 138 bzw. der pH-Messsensor 140 befinden sich in einem Abstand von vorzugsweise etwa 10 mm bis 20 mm über dem Wannenboden 52. Dadurch kann eine zuverlässige und reproduzierbare pH-Wert-Messung gewährleistet werden.

Insbesondere können die Merkmale der Schwenkeinrichtung für das Rücklaufrohr 42, der abnehmbaren Motorhaube 102 und/oder der pH-Sonde 122 sowohl getrennt eingesetzt als auch miteinander kombiniert werden.

## Patentansprüche

1. Nassdispergiervorrichtung (1) für einen Dispersionskreislauf (76), insbesondere für Laserpartikelgrößenmessgeräte, umfassend:
ein Probenbad (14) für eine Dispersion (15) mit flüssigem Dispersionsmedium,
einen Vorlauf (62) zum Einleiten der Dispersion (15) in den Dispersionskreislauf (76),
einen Rücklauf (63) zum Rückführen der Dispersion (15) aus dem Dispersionskreislauf (76) in das Probenbad (14),
eine Pumpe (68) zum Pumpen der Dispersion (15) durch den Dispersionskreislauf (76),
einen Ablauf (78) zum Ausleiten der Dispersion (15) aus dem Dispersionskreislauf (76), um den Dispersionskreislauf (76) zu leeren und ggf. zu spülen, wobei
i) eine Kreislaufstellung, in welcher die Dispersion bei Betrieb der Pumpe (68) in den Dispersionskreislauf (76) gepumpt wird und durch den Dispersionskreislauf (76) und das Probenbads (14) zirkuliert, um an der Dispersion mit einer Messzelle (72) im Durchfluss messen zu können, und
ii) eine Ablauf- und Spülstellung, in welcher die Dispersion bei Betrieb der Pumpe (68) aus dem Dispersionskreislauf (76) in den Ablauf (78) gepumpt wird, um den Dispersionskreislauf (76) und das Probenbad (14) von der darin befindlichen Dispersion (15) zu entleeren und ggf. mit Frischmedium zu spülen,
definiert sind,
**gekennzeichnet durch**
eine pH-Sonde (122) zum Messen des pH-Wertes der Dispersion (15) in dem Dispersionskreislauf (76).

2. Nassdispergiervorrichtung (1) nach Anspruch 1, ferner umfassend
ein Messgerät an welches die pH-Sonde (102) anschließbar ist, und welches den pH-Wert elektronisch ausgibt und/oder optisch anzeigt.

3. Nassdispergiervorrichtung (1) nach einem der vorstehenden Ansprüche,
wobei das Messgerät an eine Steuer- und Auswerteeinrichtung eines Partikelgrößenmessgeräts gekoppelt ist und die gemessenen pH-Wert-Daten in die Steuer- und Auswerteeinrichtung einspeist und/oder wobei ein Speicher umfasst ist, welcher die gemessenen pH-Werte während der Zirkulation der Dispersion (15) fortlaufend speichert.

4. Nassdispergiervorrichtung (1) nach einem der vorstehenden Ansprüche,
wobei eine Zuführeinrichtung (142) umfasst ist, welche, automatisch mittels der pH-Messwerte gesteuert, der Dispersion (15) einen Stoff zuführt, welcher den pH-Wert der Dispersion verändert, um pH-Wert der Dispersion (15) auf einen vorbestimmten Wert einzustellen.

5. Nassdispergiervorrichtung (1) nach einem der vorstehenden Ansprüche,
wobei ein Temperatursensor (144) zum Messen der Temperatur der Dispersion (15) und/oder eine Heizeinrichtung (146) zum Heizen der Dispersion (15) umfasst ist, welche mittels der Messwerte des Temperatursensors (144) gesteuert wird.

6. Nassdispergiervorrichtung (1) nach einem der vorstehenden Ansprüche,
wobei die pH-Sonde (112) in die in dem Probenbad (14) befindliche Dispersion (15) eintaucht.

7. Nassdispergiervorrichtung (1) nach einem der vorstehenden Ansprüche,
wobei das Probenbad (14) nach oben offen ist, so dass die disperse Phase von oben in das Probenbad (14) eingefüllt werden kann und/oder
wobei eine Sondenhalterung (124) am oberen Rand des Probenbades (14) angeordnet ist, um die pH-Sonde (122) zu befestigen, wobei die pH-Sonde (122) mit einem unteren Ende (138) in die Dispersion (15) in dem Probenbad (14) eintaucht.

8. Nassdispergiervorrichtung (1) nach Anspruch 7,
wobei die pH-Sonde (122) als Nachrüstteil ausgebildet ist und für den Benutzer mit der Probenhalterung (124) lösbar an dem Probenbad (14) befestigbar ist.

9. Nassdispergiervorrichtung (1) nach einem der vorstehenden Ansprüche,
wobei die pH-Sonde (122) stabförmig ausgebildet ist.

10. Nassdispergiervorrichtung (1) nach einem der vorstehenden Ansprüche,
wobei sich die pH-Sonde (122) vom oberen Rand des Probenbades (14) schräg nach unten in die in dem Probenbad (14) befindliche Dispersion (15) erstreckt.

11. Nassdispergiervorrichtung (1) nach einem der vorstehenden Ansprüche,
wobei das Probenbad (14) eine obere Sammelwanne (48) und eine unter der Sammelwanne (48) angeordnete Pumpenkammer (50) umfasst, und wobei der Boden (52) der Sammelwanne (48) eine Öffnung (54) aufweist, durch welche die Dispersion (15) in die Pumpenkammer (50) fließt, um aus der Pumpenkammer (50) in den Dispersionskreislauf (76) gepumpt zu werden und wobei der pH-Messsensor (140) an einer unteren Spitze der pH-Sonde (122) angebracht ist und der pH-Messsensor (140) in einem Abstand über dem Boden (52) der Sammelwanne (48) positioniert ist.

12. Nassdispergiervorrichtung (1) nach Anspruch 11,
wobei die Pumpe (68) als eine Zentrifugalpumpe ausgebildet ist und der Pumpenmotor (60) oberhalb des Probenbades (14) angeordnet ist und sich eine vertikale Pumpenantriebswelle (58) von dem Pumpenmotor (60) nach unten durch die Öffnung (54) des Bodens (52) der Sammelwanne (48) in die Pumpenkammer (50) unterhalb der Sammelwanne (48) hinein erstreckt, um ein in der Pumpenkammer (50) befindliches Pumpenrad (56) anzutreiben, und wobei sich die stabförmige pH-Sonde (122) windschief zu der Pumpenantriebswelle (48) erstreckt.

13. Nassdispergiervorrichtung (1) nach einem der vorstehenden Ansprüche,
ferner umfassend ein Rücklaufelement (42) mit einer Strahlöffnung (82), wobei das Rücklaufelement (42) und das Probenbad (14) zumindest zwei Stellungen zueinander definieren, nämlich
i) die Kreislaufstellung, in welcher die Dispersion (15) in den Dispersionskreislauf (76) pumpbar ist, um durch den Dispersionskreislauf (76) zu zirkulieren, und
ii) die Ablauf- und Spülstellung, in welcher die Dispersion (15) in den Ablauf (78) pumpbar ist,
wobei das Rücklaufelement (42) und das Probenbad (14) beweglich zueinander angeordnet sind, um durch eine relative Bewegung zueinander zwischen der Kreislaufstellung und der Ablauf- und Spülstellung hin und her zu schalten.

14. Nassdispergier-Baugruppe umfassend
eine Nassdispergiervorrichtung (1) gemäß einem der vorstehenden Ansprüche,
einen Dispersionskreislauf (76) durch welchen in der Kreislaufstellung die Dispersion (15) im Kreislauf gepumpt wird, wobei das Probenbad (14) als Vorratsbehälter für die Dispersion (15) dient, und
eine Messzelle (72) in dem Dispersionskreislauf (15), um die Dispersion (15) in der Messzelle (72) im Durchfluss zu untersuchen.

15. Partikelgrößenmessgerät zur Untersuchung der Partikelgrößenverteilung der in der Dispersion dispergierten Partikel, umfassend
eine Nassdispergiervorrichtung (1) gemäß einem der vorstehenden Ansprüche,
einen Dispersionskreislauf (76) durch welchen in der Kreislaufstellung die Dispersion (15) im Kreislauf gepumpt wird, wobei das Probenbad als Vorratsbehälter für die Dispersion (15) dient,
eine Messzelle (72) in dem Dispersionskreislauf (76), um die Dispersion (15) in der Messzelle (72) im Durchfluss optisch zu untersuchen, und
optische Komponenten zur Erzeugung von Streu-/Beugungsmustern an den Partikeln in der die Messzelle (72) durchströmenden Dispersion (15).

## Claims

1. A wet dispersing device (1) for a dispersion circuit (76), in particular for laser particle size measuring devices, comprising:
a sample bath (14) for a dispersion (15), containing a liquid dispersion medium;
a feed line (62) for introducing the dispersion (15) into the dispersion circuit (76);
a return line (63) for returning the dispersion (15) from the dispersion circuit (76) to the sample bath (14);
a pump (68) for pumping the dispersion (15) through the dispersion circuit (76);
an outlet (78) for discharging the dispersion (15) from the dispersion circuit (76) in order to empty and/or flush the dispersion circuit (76); defining
i) a circulation position in which, when the pump (68) is operated, the dispersion is pumped into the dispersion circuit (76) and circulates through the dispersion circuit (76) and the sample bath (14) in order to allow for measurements to be made on the dispersion using a measuring cell (72) through which the dispersion flows; and
ii) a discharge and flush position in which, when the pump (68) is operated, the dispersion is pumped from the dispersion circuit (76) into the outlet (78), to empty the dispersion circuit (76) and the sample bath (14) from the dispersion (15) contained therein and, optionally, to flush with fresh medium;
**characterized by**
a pH probe (122) for measuring the pH value of the dispersion (15) in the dispersion circuit (76).

2. The wet dispersing device (1) according to claim 1, further comprising
a measuring device to which the pH probe (102) can be connected and which electronically outputs and/or visually displays the pH value.

3. The wet dispersing device (1) according to any one of the preceding claims,
wherein the measuring device is coupled to a control and evaluation device of a particle size measuring device and feeds the measured pH value data into the control and evaluation device, and/or comprises a memory which continuously stores the measured pH values while the dispersion (15) is being circulated.

4. The wet dispersing device (1) according to any one of the preceding claims,
comprising a feeding means (142) which is automatically controlled using the pH readings to feed a substance to the dispersion (15), which changes the pH value of the dispersion in order to adjust the pH value of the dispersion (15) to a predetermined value.

5. The wet dispersing device (1) according to any one of the preceding claims,
comprising a temperature sensor (144) for measuring the temperature of the dispersion (15), and/or a heating means (146) for heating the dispersion (15), which is controlled using the readings of the temperature sensor (144).

6. The wet dispersing device (1) according to any one of the preceding claims,
wherein the pH probe (112) is immersed in the dispersion (15) contained in the sample bath (14).

7. The wet dispersing device (1) according to any one of the preceding claims,
wherein the sample bath (14) is open at the top, so that the disperse phase can be filled into the sample bath (14) from above; and/or
wherein a probe holder (124) is provided at the upper edge of the sample bath (14) for fixing the pH probe (122), wherein the pH probe (122) has a lower end (138) thereof immersed in the dispersion (15) in the sample bath (14).

8. The wet dispersing device (1) according to claim 7,
wherein the pH probe (122) is in the form of a retrofit part and can be releasably attached to the sample bath (14) by the user using the sample holder (124).

9. The wet dispersing device (1) according to any one of the preceding claims,
wherein the pH probe (122) is rod-shaped.

10. The wet dispersing device (1) according to any one of the preceding claims,
wherein the pH probe (122) extends obliquely downwards from the upper edge of the sample bath (14) and into the dispersion (15) contained in the sample bath (14).

11. The wet dispersing device (1) according to any one of the preceding claims,
wherein the sample bath (14) comprises an upper collection tank (48) and a pump chamber (50) arranged below the collection tank (48), and wherein the bottom (52) of the collection tank (48) has an opening (54) through which the dispersion (15) flows into the pump chamber (50) to be pumped out of the pump chamber (50) into the dispersion circuit (76), and wherein the pH measuring sensor (140) is attached to a lower tip of the pH probe (122) and the pH measurement sensor (140) is positioned at a distance above the bottom (52) of the collection tank (48).

12. The wet dispersing device (1) according to claim 11,
wherein the pump (68) is in the form of a centrifugal pump and the pump motor (60) is arranged above the sample bath (14) and a vertical pump driving shaft (58) extends downwards from the pump motor (60) through the opening (54) in the bottom (52) of the collection tank (48) and into the pump chamber (50) below the collection tank (48) to drive an impeller (56) arranged inside the pump chamber (50), and wherein the rod-shaped pH probe (122) extends askew relative to the pump drive shaft (48).

13. The wet dispersing device (1) according to any one of the preceding claims,
further comprising a return line member (42) having a jet orifice (82), wherein the return line member (42) and the sample bath (14) define at least two positions relative to one another, namely
i) the circulation position in which the dispersion (15) can be pumped into the dispersion circuit (76) in order to be circulated through the dispersion circuit (76); and
ii) the discharge and flush position in which the dispersion (15) can be pumped into the outlet (78);
wherein the return line member (42) and the sample bath (14) are arranged so as to be movable relative to one another for switching between the circulation position and the discharge and flush position by a movement relative to one another.

14. A wet dispersing assembly, comprising
a wet dispersing device (1) according to any one of the preceding claims;
a dispersion circuit (76) through which the dispersion (15) is pumped in the circulation position, with the sample bath (14) serving as a storage container for the dispersion (15); and
a measuring cell (72) in the dispersion circuit (15) for analysing the dispersion (15) while it flows through the measuring cell (72).

15. A particle size measuring device for analysing the particle size distribution of the particles dispersed in the dispersion, comprising
a wet dispersing device (1) according to any one of the preceding claims;
a dispersion circuit (76) through which the dispersion (15) is pumped in the circulation position, with the sample bath serving as a storage container for the dispersion (15); and
a measuring cell (72) in the dispersion circuit (76) for optically analysing the dispersion (15) while it flows through the measuring cell (72); and
optical components for generating scattering/diffraction patterns on the particles in the dispersion (15) flowing through the measuring cell (72).

## Revendications

1. Dispositif de dispersion humide (1) destiné à un circuit de dispersion (76), en particulier à des appareils de mesure de taille de particules au laser, comprenant :
un bain d'échantillon (14) pour une dispersion (15) avec un milieu de dispersion liquide,
une canalisation d'arrivée (62) pour l'introduction de la dispersion (15) dans le circuit de la dispersion (76),
une canalisation de retour (63) pour renvoyer la dispersion (15) du circuit de dispersion (76) dans le bain d'échantillon (14),
une pompe (68) pour le pompage de la dispersion (15) à travers le circuit de dispersion (76),
un moyen d'écoulement (78) pour l'évacuation de la dispersion (15) du circuit de dispersion (76), afin de vider et, le cas échéant, rincer le circuit de dispersion (76),
dans lequel sont définies
i) une position de circuit, dans laquelle la dispersion est pompée dans le circuit de dispersion (76), lorsque la pompe (68) fonctionne, et circule dans le circuit de dispersion (76) et le bain d'échantillon (14) afin de pouvoir effectuer des mesures sur la dispersion avec une cellule de mesure (72) dans le débit, et
ii) une position d'écoulement et de rinçage, dans laquelle la dispersion est pompée du circuit de dispersion (76) dans le moyen d'écoulement (78), lorsque la pompe (68) fonctionne, afin de vidanger le circuit de dispersion (76) et le bain d'échantillon (14) de la dispersion (15) qui s'y trouve et de les rincer le cas échéant avec du fluide frais,
**caractérisé en ce qu'**il comporte
une sonde de pH (122) destinée à mesurer la valeur pH de la dispersion (15) dans le circuit de dispersion (76).

2. Dispositif de dispersion humide (1) selon la revendication 1, comprenant en outre
un appareil de mesure auquel peut être connectée la sonde de pH (102) et qui délivre la valeur pH par des moyens électroniques et/ou l'indique par des moyens optiques.

3. Dispositif de dispersion humide (1) selon l'une des revendications précédentes,
dans lequel l'appareil de mesure est couplé à un dispositif de commande et d'évaluation d'un appareil de mesure de taille de particules et injecte les données mesurées de valeurs pH dans le dispositif de commande et d'évaluation, et/ou dans lequel il est prévu une mémoire qui sauvegarde en continu les valeurs pH mesurées, pendant la circulation de la dispersion (15).

4. Dispositif de dispersion humide (1) selon l'une des revendications précédentes,
dans lequel il est prévu un dispositif d'amenée (142) qui apporte automatiquement à la dispersion (15), en étant commandé par les valeurs pH mesurées, une substance qui modifie la valeur pH de la dispersion afin de régler la valeur pH de la dispersion (15) à une valeur prédéfinie.

5. Dispositif de dispersion humide (1) selon l'une des revendications précédentes,
dans lequel il est prévu un capteur de température (144) destiné à mesurer la température de la dispersion (15) et/ou un dispositif de chauffage (146) qui est destiné à chauffer la dispersion (15) et est commandé au moyen des valeurs mesurées du capteur de température (144).

6. Dispositif de dispersion humide (1) selon l'une des revendications précédentes,
dans lequel la sonde de pH (112) est immergée dans la dispersion (15) se trouvant dans le bain d'échantillon (14).

7. Dispositif de dispersion humide (1) selon l'une des revendications précédentes,
dans lequel le bain d'échantillon (14) est ouvert vers le haut, de sorte que la phase en dispersion peut être introduite d'en haut dans le bain d'échantillon (14), et/ou
dans lequel un support de sonde (124) est placé sur le bord supérieur du bain d'échantillon (14) pour fixer la sonde de pH (122), la sonde de pH (122) plongeant avec une extrémité inférieure (138) dans la dispersion (15) dans le bain d'échantillon (14).

8. Dispositif de dispersion humide (1) selon la revendication 7,
dans lequel la sonde de pH (122) est réalisée comme pièce d'équipement ultérieur et peut être fixée sur le bain d'échantillon (14) avec possibilité pour l'utilisateur de la retirer avec le support d'échantillon (124).

9. Dispositif de dispersion humide (1) selon l'une des revendications précédentes,
dans lequel la sonde de pH (122) est réalisée sous forme de tige.

10. Dispositif de dispersion humide (1) selon l'une des revendications précédentes,
dans lequel la sonde de pH (122) s'étend en biais depuis le bord supérieur du bain d'échantillon (14), vers le bas, dans la dispersion (15) se trouvant dans le bain d'échantillon (14).

11. Dispositif de dispersion humide (1) selon l'une des revendications précédentes,
dans lequel le bain d'échantillon (14) comprend un bac collecteur supérieur (48) et une chambre de pompe (50) disposée sous le bac collecteur (48), et dans lequel le fond (52) du bac collecteur (48) présente une ouverture (54) à travers laquelle la dispersion (15) s'écoule dans la chambre de pompe (50) afin d'être pompée depuis la chambre de pompe (50) dans le circuit de dispersion (76), et dans lequel le capteur de mesure de pH (140) est placé sur une pointe inférieure de la sonde de pH (122) et le capteur de mesure de pH (140) est disposé à distance au-dessus du fond (52) du bac collecteur (48).

12. Dispositif de dispersion humide (1) selon la revendication 11,
dans lequel la pompe (68) est réalisée sous forme de pompe centrifuge, et le moteur de pompe (60) est placé au-dessus du bain d'échantillon (14), et un arbre vertical d'entraînement de pompe (58) s'étend vers le bas à partir du moteur de pompe (60), à travers l'ouverture (54) du fond (52) du bac collecteur (48), dans la chambre de pompe (50) située sous le bac collecteur (48), afin d'entraîner une roue de pompe (56) se trouvant dans la chambre de pompe (50), et dans lequel la sonde de pH (122) en forme de tige s'étend en étant inclinée par rapport à l'arbre d'entraînement de pompe (48).

13. Dispositif de dispersion humide (1) selon l'une des revendications précédentes,
comprenant en outre un élément de retour (42) doté d'une ouverture de jet (82), l'élément de retour (42) et le bain d'échantillon (14) définissant au moins deux positions l'un par rapport à l'autre, à savoir
i) la position de circuit, dans laquelle la dispersion (15) peut être pompée dans le circuit de dispersion (76) pour circuler dans le circuit de dispersion (76), et
ii) la position d'écoulement et de rinçage, dans laquelle la dispersion (15) peut être pompée dans le moyen d'écoulement (78),
l'élément de retour (42) et le bain d'échantillon (14) étant disposés de façon mobile l'un par rapport à l'autre, afin de commuter en alternance entre la position de circuit et la position d'écoulement et de rinçage, par un mouvement relatif entre eux.

14. Module de dispersion humide, comprenant
un dispositif de dispersion humide (1) selon l'une des revendications précédentes,
un circuit de dispersion (76) à travers lequel, dans la position de circuit, la dispersion (15) est pompée en circuit, le bain d'échantillon (14) servant de réservoir de stockage pour la dispersion (15), et
une cellule de mesure (72) dans le circuit de dispersion (15), afin d'analyser la dispersion (15) dans la cellule de mesure (72), dans le débit.

15. Appareil de mesure de taille de particules, destiné à l'analyse de la distribution des tailles des particules dispersées dans la dispersion, comprenant
un dispositif de dispersion humide (1) selon l'une des revendications précédentes,
un circuit de dispersion (76), à travers lequel la dispersion (15) est pompée en circuit, dans la position de circuit, le bain d'échantillon servant de réservoir de stockage pour la dispersion (15),
une cellule de mesure (72) dans le circuit de dispersion (76), afin d'examiner la dispersion (15) optiquement dans la cellule de mesure (72), dans le débit, et
des composants optiques destinés à générer des motifs de dispersion/diffraction sur les particules de la dispersion (15) traversant la cellule de mesure (72).
